(19) Europäisches Patentamt
European Patent Office
Office européen des brevets

(11) EP 1 964 345 B1

(12) **EUROPÄISCHE PATENTSCHRIFT**

(45) Veröffentlichungstag und Bekanntmachung des Hinweises auf die Patenterteilung:
**03.10.2018 Patentblatt 2018/40**

(21) Anmeldenummer: **06829159.0**

(22) Anmeldetag: **28.11.2006**

(51) Int Cl.:
***H04L 25/03*** (2006.01)

(86) Internationale Anmeldenummer:
**PCT/EP2006/011412**

(87) Internationale Veröffentlichungsnummer:
**WO 2007/079827 (19.07.2007 Gazette 2007/29)**

(54) **VERFAHREN UND ENTZERRER ZUR ENTZERRUNG EINER ÜBER EINEN ZEITVERÄNDERLICHEN ÜBERTRAGUNGSKANAL EMPFANGENEN DATENSYMBOL-SEQUENZ**

METHOD AND EQUALISER FOR EQUALISING A DATA SYMBOL SEQUENCE CAPTURED BY A TIME-VARIABLE TRANSMISSION CHANNEL

PROCEDE ET EGALISEUR DESTINES A EGALISER UNE SEQUENCE DE SYMBOLES DE DONNEES REÇUE PAR L'INTERMEDIAIRE D'UN CANAL DE TRANSMISSION VARIABLE DANS LE TEMPS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.12.2005 DE 102005061992**
**17.02.2006 DE 102006007407**
**27.03.2006 DE 102006014064**

(43) Veröffentlichungstag der Anmeldung:
**03.09.2008 Patentblatt 2008/36**

(73) Patentinhaber: **Rohde & Schwarz GmbH & Co. KG**
**81671 München (DE)**

(72) Erfinder: **DETERT, Thorben**
**80634 München (DE)**

(74) Vertreter: **Körfer, Thomas**
**Mitscherlich PartmbB**
**Patent- und Rechtsanwälte**
**Sonnenstrasse 33**
**80331 München (DE)**

(56) Entgegenhaltungen:
**DE-A1- 10 228 159     US-A1- 5 432 821**

- **ISABELLA DE BROECK: "Interleaved Frequency-Division Multiple-Access" DISSERTATION, [Online] 9. Januar 2004 (2004-01-09), Seiten 1-100, XP002424443 Darmstadt Gefunden im Internet: URL:http://elib.tu-darmstadt.de/diss/00052 5/> [gefunden am 2007-03-13]**
- **I. DE BROECK, M. KULLMANN, U. SORGER: "Reduced State Joint Channel Estimation and Equalization" SECOND INTERNATIONAL WORKSHOP ON MULTI-CARRIER SPREAD SPECTRUM, September 1999 (1999-09), XP009080631 Oberpfaffenhofen**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Entzerrung einer über einen zeitveränderlichen Übertragungskanal empfangenen Datensymbol-Sequenz und einen entsprechenden Entzerrer.

Ein Sendesignal wird in einem realen Übertragungskanal in mehrfacher Hinsicht gestört. Neben der Überlagerung von Störsignalen - vor allem Rauschen - wird das Sendesignal insbesondere durch die Übertragungscharakteristik des Übertragungskanals verzerrt (beispielsweise Fading-Effekte oder Intersymbolinterferenzen). Das gestörte Empfangssignal, das nach der Demodulation als verzerrte Datensymbol-Sequenz vorliegt, muß in einem Entzerrer in einen der gesendeten Datensymbol-Sequenz entsprechenden Datenstrom übergeführt werden.

Der Stand der Technik umfaßt eine Vielzahl von Entzerrungsverfahren, aus denen in Abhängigkeit des vorliegenden Übertragungssignals und der vorherrschenden Stör- und Verzerrungsquellen das jeweils optimale Entzerrungsverfahren auszuwählen ist.

Eine wichtige Gruppe von Entzerrungsverfahren stellen die Maximum-Likelihood-Verfahren dar, bei denen die gestörte empfangene Datensymbol-Sequenz mit allen möglichen ungestörten Datensymbol-Sequenzen aus einem bei der Modulation verwendeten Datensymbolalphabet verglichen wird und diejenige ungestörte Datensymbol-Sequenz als Schätzung für die gesendete Datensymbol-Sequenz ausgewählt wird, die eine minimale euklidische Distanz zur gestörten empfangenen Datensymbol-Sequenz aufweist. Die Anzahl der Vergleiche zwischen dem gestörten empfangenen Datensymbol und allen möglichen Referenz-Datensymbolen, die der Mächtigkeit des Datensymbolalphabets des verwendeten Modulationsverfahrens entspricht, kann bei höherwertigen Modulationsverfahren - beispielsweise 64-QAM, 128-QAM - sehr umfangreich sein.

Diese Komplexität in der Schätzung wird zusätzlich dadurch verschärft, dass aufgrund der Faltung der gesendeten Datensymbol-Sequenz mit der Impulsantwort des Übertragungskanals einer bestimmten Impulslänge Anteile eines Datensymbols der gesendeten Datensymbol-Sequenz sich zeitlich vorausgehenden Datensymbolen der gesendeten Datensymbol-Sequenz überlagern. Diese zeitlichen Verkopplungen zwischen den einzelnen Datensymbolen einer Datensymbol-Sequenz, die einen Zustandsautomaten darstellen, können in ihrer zeitlichen Abfolge mittels eines Zustandsdiagramms modelliert werden. Ein weit verbreitetes Zustandsdiagramm, das Trellis-Diagramm, stellt für die Impulslänge der Impulsantwort des Übertragungskanals und für das Datensymbol-Alphabet des verwendeten Modulationsverfahrens alle möglichen Zustände und Zustandsübergänge dar.

Mit Hilfe des Trellis-Diagramms kann die Schätzung des im jeweiligen Zeitpunkt gesendeten Datensymbols aus der euklidischen Distanz zwischen dem gestörten im jeweiligen Zeitpunkt empfangenen Datensymbol und allen zu den im jeweiligen Zeitpunkt möglichen Zuständen korrespondierenden Referenz-Datensymbolen ermittelt werden. Eine Schätzung des im jeweiligen Zeitpunkt gesendeten Datensymbols ist aufgrund der Vielzahl von Zuständen und der noch viel zahlreicheren Kombinationsmöglichkeiten aufeinander folgenden Zustände bei den heute zum Einsatz kommenden höherwertigen Modulationsverfahren in Echtzeit nicht möglich. Ein praktikabler Lösungsweg stellt der Viterbi-Algorithmus dar, der eine Vielzahl von Kombinationsmöglichkeiten im Trellis-Diagramm dadurch reduziert, dass nur derjenige Übergang zwischen einem Zustand im letzten Zeitpunkt und allen möglichen Nachfolgezustände im aktuellen Zeitpunkt ausgewählt wird, der die minimale euklidische Distanz zwischen dem gestörten im aktuellen Zeitpunkt empfangenen Datensymbol und den zu allen im aktuellen Zeitpunkt möglichen Vorgängerzuständen gehörigen Referenz-Datensymbolen aufweist. Auf diese Weise reduziert sich die Schätzproblematik auf die Identifizierung von der Anzahl von Zuständen entsprechenden Anzahl sogenannter "Überlebenspfade" im Trellis-Diagramm.

Aufgrund der Zeitveränderlichkeit des Übertragungskanals ist bei der Minimierung der euklidischen Distanz in jedem Zustandsübergang nicht nur das zum im aktuellen Zeitpunkt auszuwählenden Zustand gehörige Datensymbol, sondern auch die Impulsantwort des Übertragungskanals im aktuellen Zeitpunkt zu schätzen. Da die Schätzung der Impulsantwort des Übertragungskanals im aktuellen Zeitpunkt von dem im aktuellen Zeitpunkt gesendeten Datensymbol und damit vom im aktuellen Zeitpunkt geschätzten Datensymbol abhängt, ist für jeden Zustand im aktuellen Zeitpunkt eine Schätzung der Impulsantwort des Übertragungskanals erforderlich. Bei einem Symbolalphabet des verwendeten Modulationsverfahrens der Mächtigkeit $M$ und insgesamt $N_s$ Zuständen je Zeitpunkt sind folglich insgesamt $M \cdot N_s$ Schätzungen der Kanalimpulsantwort durchzuführen.

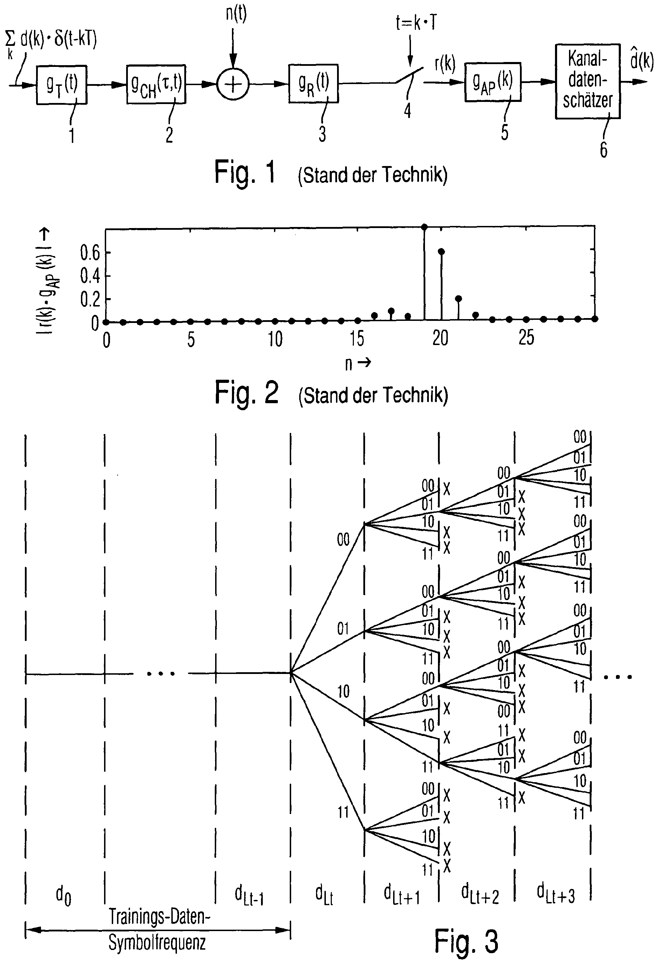

Diese Vielzahl von Schätzungen der Impulsantwort des Übertragungskanals wird bei Verfahren des Standes der Technik dadurch reduziert, dass die Anzahl der Zustände durch "Verkürzung der Impulslänge des Übertragungskanals" verkleinert wird. Hierzu wird in einem Übertragungssystem gemäß Fig. 1 mit einem Sender 1, der eine Sender-Gewichtsfunktion $g_T(t)$ aufweist, einem Übertragungskanal 2 mit der zeitvarianten Gewichtsfunktion $g_{CH}(\tau,t)$, einem Empfänger 3, der i.a. als Matched-Filter mit der Gewichtsfunktion $g_R(t)$ realisiert ist, einer Abtasteinheit 4 und einem gemischten Kanal-Daten-Schätzer 6 zusätzlich ein Vorfilter 5 zwischen Abtasteinheit 4 und gemischten Kanal-Daten-Schätzer 6 eingeführt. Dieses Vorfilter ist entweder als Impulsverkürzungsfilter oder als einen Allpaß approximierendes FIR-Filter realisiert, dessen Gewichtsfunktion $g_{AP}(t)$ in Kombination mit der Gewichtsfunktion $g_T(t)$ des Senders 1, der Gewichtsfunktion $g_{CH}(\tau,t)$ des Übertragungskanals und der Gewichtsfunktion $g_R(t)$ des Matched-Filters ein minimalphasiges System bildet, dessen Impulsantwort durch eine minimierte Impulslänge gekennzeichnet ist.

Die Realisierung eines derartigen Vorfilters mit einem Kalman-Filter ist in Badri-Hoeher, S. et al.: "Fast Computation of a Discrete-Time Whitened Matched Filter Based on Kalman Filtering" in IEEE Transactions on Wireless Communications, Vol. 3, No. 6, November 2004, Seiten 2417-2424 dargestellt. Eine weitere Implementierung eines derartigen Vorfilters in einem Maximum-Likelihood-Sequenzschätzer kann Younis, W. et al.: "Joint Prefiltering and MLSE Equalization of Space-Time-Coded Transmissions Over Frequency-Selective Channels" in IEEE Transactions on Vehicular Technology, Vol. 51, No. 1, Januar 2002, Seiten 144-154, entnommen werden. Nachteilig an allen diesen Realisierungen ist der vergleichsweise hohe Rechenaufwand in der Berechnung des Filteralgorithmuses des Vorfilters.

Hinzukommt, dass in der praktischen Anwendung des Maximum-Likelihood-Verfahrens zur Schätzung der gesendeten Datensymbol-Sequenzen aus Rechenzeitgründen ein sogenanntes Blockfading angenommen wird, bei dem eine Schätzung der Kanalimpulsantwort nur einmal je Zeitschlitz oder je zu übertragenden Datensymbol-Burst durchgeführt wird und die Impulsantwort des Übertragungskanals über die Länge des Zeitschlitzes bzw. des Datensymbol-Bursts als konstant betrachtet wird. Wird bei dieser Näherung für die Impulsantwort des Übertragungskanals im ungünstigsten Fall die Faltung der empfangenen und mit dem Matched-Filter vorgefilterten Datensymbol-Sequenz $r(k)$ mit der Gewichtsfunktion $g_{AP}(k)$ am Ende des Datensymbol-Bursts - Symbol "o" in Fig. 2 - durchgeführt, so hat sich der Kanal geändert und es kommt gemäß Fig. 2 zu Vorschwingern, während diese im weniger ungünstigen Fall der Faltung der empfangenen und mit dem Matched-Filter vorgefilterten Datensymbol-Sequenz $r(k)$ mit der Gewichtsfunktion $g_{AP}(k)$ in der Mitte des Datensymbol-Bursts - Symbol "x" in Fig. 2 - nicht auftreten. Der Grund ist, dass $g_{AP}(k)$ aus einer Schätzung des Kanals mittels einer Trainings-Sequenz erfolgt. Je weiter man sich von der Trainings-Sequenz entfernt, desto weniger verkürzt $g_{AP}(k)$ den sich änderenden Kanal. Folglich entsteht im ungünstigen Fall trotz eines guten Signal-Rauschabstands bei Verwendung eines Matched-Filters ein unerwünschter Fehlerboden in der empfangenen Datensymbol-Sequenz.

Eine kombinierte Kanalschätzung und Entzerrung basierend auf einer rekursiven Berechnung der Pfadmetrik unter Verwendung von a-priori und a-posteriori Schätzfehlern wird auf den Seiten 60-83 in Isabella de Broeck: "Interleaved Frequency-Division Multiple Acess" Darmstädter Dissertation, 09. Januar 2004, beschrieben.

Aufgabe der Erfindung ist es also, ein Verfahren und einen entsprechenden Entzerrer zur Entzerrung der gestörten empfangenen Datensymbol-Sequenz bei einer zeitveränderlichen Impulsantwort des Übertragungskanals zu entwickeln, das mit einem geringen Rechenaufwand verbunden ist und gleichzeitig bei gegebenen Signal-Rauschabstand keine zusätzlichen Störungen in der empfangenen Datensymbol-Sequenz erzeugt.

Die Aufgabe wird durch ein Verfahren zur Entzerrung einer über einen zeitveränderlichen Übertragungskanal empfangenen Datensymbol-Sequenz mit den Merkmalen des Anspruchs 1 und einen entsprechenden Entzerrer mit den Merkmalen des Anspruchs 16 gelöst. Vorteilhafte Weiterbildungen des erfindungsgemäßen Verfahrens sind in den abhängigen Ansprüchen aufgeführt.

Beim erfindungsgemäßen Verfahren wird sowohl die Metrik zur Auswahl der Zustände in den einzelnen "Überlebenspfaden" im aktuellen Zeitpunkt - als Schätzungen für das im aktuellen Zeitpunkt übertragene Datensymbol - als auch die Schätzungen für die Kanalimpulsantwort im aktuellen Zeitpunkt iterativ berechnet.

Da hierbei die jeweils zu den einzelnen Zuständen gehörigen Metriken im aktuellen Zeitpunkt als auch die Schätzungen der Kanalimpulsantwort für jeden Zustand im aktuellen Zeitpunkt von der Schätzung der Kanalimpulsantwort in vorherigen Zeitpunkten abhängt, sind bei insgesamt $N_s$ Zuständen im vorherigen Zeitpunkt jeweils nur $N_s$ Schätzungen der Kanalimpulsantwort im Gegensatz zu den insgesamt $M \cdot N_s$ Schätzungen der Kanalimpulsantwort im Fall des Viterbi-Algorithmuses erforderlich.

Wie beim Viterbi-Algorithmus werden im aktuellen Zeitpunkt diejenigen Zustände im Trellis-Diagramm ausgewählt, die eine minimale Pfadmetrik aufweisen. In einer ersten Ausführungsform der Erfindung werden nur diejenigen Zustände bei der Auswahl mittels Minimierung der Metrik berücksichtigt, die aus einem gemeinsamen Zustand im vorhergehenden Zeitpunkt hervorgehen, während in einer zweiten Ausführungsform der Erfindung, alle Zustände im aktuellen Zeitpunkt, die aus allen Zuständen im vorhergehenden Zeitpunkt hervorgehen, bei der Auswahl der Zustände mittels Minimierung der Metrik herangezogen werden.

Das erfindungsgemäße Verfahren kann nicht nur, wie soeben dargestellt, das Trellis-Diagramm zuerst "in der Breite" nach einer optimalen Schätzung für die gesendete Datensymbol-Sequenz ("breadth-first"-Verfahren), sondern auch in einer weiteren Ausführungsform der Erfindung das Trellis-Diagramm zuerst "in der Tiefe" nach einer optimalen Schätzung für die gesendete Datensymbol-Sequenz ("deepth-first"-Verfahren) in Anlehnung an den Stack-Algorithmus durchsuchen.

Bei der iterativen Berechnung der Pfadmetrik eines Zustands im aktuellen Zeitpunkt wird zur Pfadmetrik des Vorläuferzustands im vorhergehenden Zeitpunkt die zugehörige Zweigmetrik dazuaddiert, die sich aus dem Produkt eines erstem und zweiten a-priori-Schätzfehlers ergibt. Der erste bzw. zweite a-priori-Schätzfehler wiederum ergibt sich aus der Differenz zwischen der bis zum aktuellen Zeitpunkt empfangenen Datensymbol-Sequenz und der Schätzung der mit einer zu einem ersten bzw. zweiten Zeitpunkt geschätzten Impulsantwort des Übertragungskanals gewichteten Schätzung der bis zum aktuellen Zeitpunkt gesendeten Datensymbol-Sequenz. Der erste und zweite Zeitpunkt ist jeweils ein unterschiedlicher Zeitpunkt vor dem aktuellen Zeitpunkt.

Anstelle des Produktes eines ersten und zweiten a-priori-Schätzfehlers kann auch das Produkt aus einem a-priori-Schätzfehler und einem a-posteriori-Schätzfehler zum Einsatz kommen. Hierbei ergibt sich der a-priori-Schätzfehler aus der Differenz zwischen der bis zum aktuellen Zeitpunkt empfangenen Datensymbol-Sequenz und der Schätzung der mit einer zum vorherigen Zeitpunkt geschätzten Impulsantwort des Übertragungskanals gewichteten Schätzung der bis zum aktuellen Zeitpunkt gesendeten Datensymbol-Sequenz und der a-posteriori-Schätzfehler aus der Differenz zwischen der bis zum aktuellen Zeitpunkt empfangenen Datensymbol-Sequenz und der Schätzung der mit einer zum aktuellen Zeitpunkt geschätzten Impulsantwort des Übertragungskanals gewichteten Schätzung der bis zum aktuellen Zeitpunkt gesendeten Datensymbol-Sequenz.

In weiteren Ausführungsformen der Erfindung können die Produkte aus dem ersten und zweiten a-priori-Schätzfehler bzw. die Produkte aus dem a-priori-Schätzfehler und dem a-posteriori-Schätzfehler einer Betragsbildungsfunktion, einer Realteilbildungsfunktion oder einer sonstigen Funktion zur Vereinfachung der Berechnungen der aus komplexen Zahlen bestehenden Größen unterworfen werden.

Durch Einführung eines Gewichtungsfaktors können bei der rekursiven Berechnung der Pfadmetriken früher gesendete Datensymbole schwächer als später gesendete Datensymbole gewichtet werden.

Da aufgrund der Faltungsoperation bei der Ermittlung der Schätzung der empfangenen Datensymbol-Sequenz in zukünftigen Zeitpunkten Schätzwerte für gesendete Datensymbole und Kanalimpulsantworten im aktuellen bzw. in vorhergehenden Zeitpunkten eingehen, die im aktuellen Zeitpunkt bereits ermittelt sind, können diese in einer weiteren Ausführungsformen der Erfindung in einem Erweiterungsterm berücksichtigt werden, der mit der iterativ berechneten Pfadmetrik eine erweiterte Pfadmetrik bildet. Da zukünftig empfangene und gesendete Datensymbole zum aktuellen Zeitpunkt noch nicht bekannt sind, wird die erweiterte Metrik zum aktuellen Zeitpunkt als Erwartungswert der Differenzen zwischen den in zukünftigen Zeitpunkten empfangenen Datensymbolen und den mit der im aktuellen Zeitpunkt geschätzten Impulsantwort des Übertragungskanals gewichteten Datensymbolen der in zukünftigen Zeitpunkten gesendeten Datensymbol-Sequenzen ermittelt, wobei die Anzahl der zukünftigen Zeitpunkte der um den Faktor 1 reduzierten Impulslänge der Kanalimpulsantwort entspricht.

Auf diese Weise wird die volle Energie des zum aktuellen Zeitpunkt gesendeten Datensymbols bei der Schätzung der empfangenen Datensymbol-Sequenz zum aktuellen Zeitpunkt berücksichtigt und damit der Schätzfehler bei der Entzerrung einer empfangenen Datensymbol-Sequenz, die auf einem Übertragungskanal mit einer Kanalimpulsantwort mit einer Impulslänge größer als 1 übertragen wird, minimiert.

Die iterative Schätzung der Kanalimpulsantwort des Übertragungskanals kann über ein adaptives rekursives Kanalschätzverfahren, beispielsweise über den rekursiven Least-Squares-Algorithmus, erfolgen. Alternativ können aber auch andere adaptive rekursive Kanalschätzverfahren zum Einsatz kommen.

Die Schätzung der Kanalimpulsantwort des Übertragungskanals muss nicht zu jedem Zeitpunkt erfolgen. Bei einer sich langsam verändernden Kanalimpulsantwort des Übertragungskanals ist durchaus eine Schätzung in einem größeren Zeitraster möglich. Ändert sich die Kanalimpulsantwort des Übertragungskanals nur unwesentlich, so ist eine Kanalschätzung einzig zu Beginn der Übertragung ausreichend.

Die einzelnen Ausführungsformen des erfindungsgemäßen Verfahrens zur Entzerrung einer über einen zeitveränderlichen Übertragungskanal empfangenen Datensymbol-Sequenz werden im folgenden anhand der Zeichnung im Detail erläutert. Die Figuren der Zeichnung zeigen:

Fig. 1 ein Blockdiagramm des Übertragungssystems nach dem Stand der Technik,

Fig. 2 ein Zeitdiagramm der Impulsantwort bei einem Übertragungssystem mit einem Vorfilter nach dem Stand der Technik,

Fig. 3 ein Trellis-Diagramm zur Schätzung der Datensymbol-Sequenz nach dem erfindungsgemäßen Verfahren.

Fig. 4 eine Übersichtsdarstellung von relevanten Termen zur Pfadmetrik-Berechnung in verschiedenen Zeitpunkten,

Fig. 5 ein Blockdiagramm des erfindungsgemäßen Übertragungssystems,

Fig. 6 ein Flussdiagramm der erfindungsgemäßen Verfahrens,

Fig. 7 eine Darstellung der Bitfehlerwahrscheinlichkeit in Abhängigkeit des Signal-Rauschabstands eines Verfahrens nach dem Stand der Technik in einer "städtischen Umgebung",

Fig. 8 eine Darstellung der Bitfehlerwahrscheinlichkeit in Abhängigkeit des Signal-Rauschabstands eines Verfahrens nach dem Stand der Technik in einer "hügeliger Umgebung",

Fig. 9      eine Darstellung der Bitfehlerwahrscheinlichkeit in Abhängigkeit des Signal-Rauschabstands des erfindungsgemäßen Verfahrens ohne Erweiterungsmatrix in einer "städtischen Umgebung",

Fig. 10     eine Darstellung der Bitfehlerwahrscheinlichkeit in Abhängigkeit des Signal-Rauschabstands des erfindungsgemäßen Verfahrens mit Erweiterungsmatrix in einer "städtischen Umgebung" und

Fig. 11     eine Darstellung der Bitfehlerwahrscheinlichkeit in Abhängigkeit des Signal-Rauschabstands des erfindungsgemäßen Verfahrens mit Erweiterungsmatrix in einer "hügeligen Umgebung".

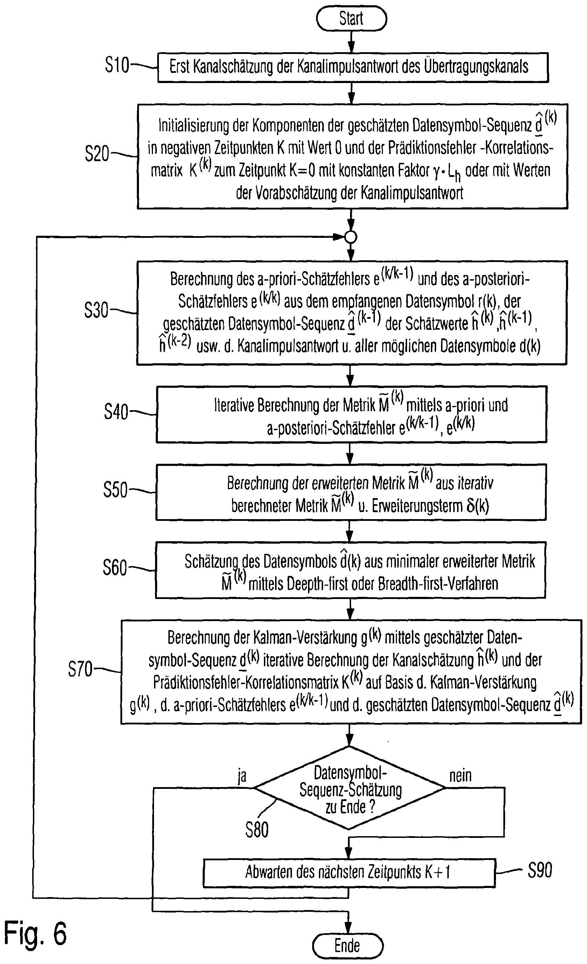

Bevor anhand der Fig. 6 das erfindungsgemäße Verfahren zur Entzerrung einer über einen zeitveränderlichen Übertragungskanal empfangenen Datensymbol-Sequenz im Detail vorgestellt wird, werden im Folgenden die für das Verständnis des erfindungsgemäßen Verfahrens erforderlichen mathematischen Grundlagen beschrieben:

Ausgangspunkt des erfindungsgemäßen Verfahrens ist ein zeitinvariantes bzw. zeitvariantes Signalmodell des Übertragungskanals gemäß Gleichung (1):

$$\underline{r}^{(k)} = \underline{D}^{(k)} \cdot \underline{h}^{(k)} + \underline{n}^{(k)} \qquad (1)$$

Der Übertragungskanal wird zur Schätzung der Impulsantwort des Übertragungskanals in einer ersten Phase mit einer gesendeten Datensymbol-Trainingssequenz $\underline{d}$ der Länge $L_t$ angeregt wird. Zur Schätzung der Impulsantwort des Übertragungskanals in den ersten $L_t$ Zeitpunkten kann ein adaptiver Kanalschätzungsalgorithmus ohne Berücksichtigung der Kanalstatistik (beispielsweise ein Least-Squares-Algorithmus), mit Berücksichtigung der unbekannten Kanalstatistik (beispielsweise ein MMSE-Kanalschätzverfahren), mit Berpücksichtigen der bekannten Kanalstatistik (beispielsweise ein Maximum-Likelihood-Schätzverfahren bzw. deren Derivate) oder eine blinde bzw. semiblinde Erstkanalschätzung eingesetzt sein.

Eine Schätzung der gesendeten Datensymbole kann folglich nicht in den ersten $L_t$ empfangenen Datensymbolen $r(k)$, $0 \le k \le L_t - 1$, sondern frühestens zum Zeitpunkt $L_t$ erfolgen. Der Vektor $\underline{r}^{(k)}$ der empfangenen Datensymbole zur Schätzung des gesendeten Datensymbols zu einem beliebigen Zeitpunkt $k$ beginnt folglich gemäß Gleichung (2) erst ab dem Zeitpunkt $L_t$.

$$\underline{r}^{(k)} = [r(L_t), r(L_t + 1), \ldots, r(k)]^T \qquad (2)$$

Analog beginnt auch der Rauschvektor $\underline{n}^{(k)}$ gemäß Gleichung (3) erst ab dem Zeitpunkt $L_t$.

$$\underline{n}^{(k)} = [n(L_t), n(L_t + 1), \ldots, n(k)]^T \qquad (3)$$

Der Vektor $\underline{h}^{(k)}$ der Impulsantwort des Übertragungskanals weist gemäß Gleichung (4) eine der Impulslänge $L_h$ der Kanalimpulsantwort entsprechende Anzahl von Komponenten auf:

$$\underline{h}^{(k)} = [h(0), h(1), \ldots, h(L_h - 1)]^T \qquad (4)$$

Die Toeplitz-Matrix $\underline{D}^{(k)}$ der gesendeten Datensymbole in Gleichung (1) ergibt sich folglich gemäß Gleichung (5):

$$\underline{D}^{(k)} = \begin{pmatrix} d(L_t) & d(L_t - 1) & \cdots & d(L_t - (L_h - 1)) \\ d(L_t + 1) & d(L_t) & \cdots & d(L_t - (L_h - 2)) \\ d(L_t + 2) & d(L_t + 1) & \cdots & d(L_t - (L_h - 3)) \\ \vdots & \vdots & \cdots & \vdots \\ d(k) & d(k-1) & \cdots & d(k - (L_h - 1)) \end{pmatrix} \qquad (5)$$

Zur Schätzung des zum Zeitpunkt $k$ gesendeten Datensymbols aus einer empfangenen Datensymbol-Sequenz $r$ nach insgesamt $\tilde{N}$ Zeitpunkten gemäß Gleichung (6), wobei $\tilde{N}$ ein um die Impulslänge $L_h$ der Kanalimpulsantwort verlängerter beliebiger Zeitpunkt $N$ ist, wird bei Anwendung des Maximum-Likelihood-Ansatzes die bedingte Wahr-

scheinlichkeit $P(\underline{D}^{(k)}|\underline{r})$ maximiert.

$$\underline{r} = [r(0), r(1), \dots, r(\tilde{N}-1)]^T \quad \text{mit} \quad \tilde{N} = N + L_h - 1 \tag{6}$$

Die bedingte Wahrscheinlichkeit $P(\underline{D}^{(k)}|\underline{r})$ aus der empfangenen Datensymbol-Sequenz $\underline{r}$ kann gemäß Gleichung (7) durch die bedingte Wahrscheinlichkeit $P(\underline{D}^{(k)}|\underline{r}^{(k)})$ aus der empfangenen Datensymbol-Sequenz $\underline{r}^{(k)}$ bis zum Zeitpunkt $k$ angenähert werden.

$$P\left(\underline{D}^{(k)} \mid \underline{r}\right) \approx P\left(\underline{D}^{(k)} \mid \underline{r}^{(k)}\right) \tag{7}$$

Eine Identität zwischen den beiden bedingten Wahrscheinlichkeiten in Gleichung (7) liegt i.a. nicht vor, da aufgrund der Faltung der gesendeten Datensymbol-Sequenz $\underline{d}^{(k)} = [d(k), d(k-1), d(k-1), \dots, d(k-2), \dots, d(k-(L_h-1))]^T$ mit der Impulsantwort $\underline{h}$ des Übertragungskanals auch Signalanteile der gesendeten Datensymbol-Sequenz $\underline{d}^{(k)}$ in empfangenen Datensymbol-Sequenzen $\{r(i)\}_{i=k+1}^{k+L_h-1}$ nach dem Zeitpunkt $k$ enthalten sein können.

Nach Anwendung der Bayes-Regel und Logarithmierung der bedingten Wahrscheinlichkeiten in Gleichung (7) ergibt sich Gleichung (8):

$$\ln P\left(\underline{D}^{(k)} \mid \underline{r}\right) \approx \ln\left(\frac{P(\underline{r}^{(k)} \mid \underline{D}^{(k)}) \cdot P(\underline{D}^{(k)})}{P(\underline{r}^{(k)})}\right) = \ln\left(\frac{f_{\underline{R}^{(k)}|\underline{D}^{(k)}}(\underline{r}^{(k)} \mid \underline{D}^{(k)}) \cdot P(\underline{D}^{(k)})}{f_{\underline{R}^{(k)}}(\underline{r}^{(k)})}\right) \tag{8}$$

Da alle Datensymbol-Sequenzen $\underline{D}^{(k)}$ als gleich wahrscheinlich angenommen werden, gilt Gleichung (9).

$$P\left(\underline{D}^{(k)}\right) = const. \tag{9}$$

Die Wahrscheinlichkeitsdichtefunktion $f_{\underline{R}^{(k)}}(\underline{r}^{(k)})$ einer bis zum Zeitpunkt $k$ empfangenen Datensymbol-Sequenz $\underline{r}^{(k)}$ weist für alle möglichen bis zu beliebigen Zeitpunkten $k$ empfangenen Datensymbol-Sequenzen $\underline{R}^{(k)}$ einen identischen Verlauf auf und beeinflußt deshalb die bedingte Wahrscheinlichkeit $P(\underline{D}^{(k)}|\underline{r})$ nicht.

Für ein Gauß-verteiltes Rauschen ergibt sich die Wahrscheinlichkeitsdichtefunktion $f_{\underline{R}(k)|\underline{D}(k)}(\underline{r}^{(k)}|\underline{D}^{(k)})$ gemäß Gleichung (10), wobei $\tilde{L}(\underline{D}^{(k)}, \underline{h}^{(k)}, \underline{r}^{(k)})$ die Log-Likelihood-Funktion, $C_n$ die Kovarianzmatrix des Rauschsignals $n$, $I_n$ die Einheitsmatrix und $\overline{N}$ die Dimension der empfangenen Datensymbol-Sequenz $\underline{r}^{(k)}$ gemäß Gleichung (11) ist:

$$f_{\underline{R}^{(k)}|\underline{D}^{(k)}}(\underline{r}^{(k)} \mid \underline{D}^{(k)}) = \frac{1}{\pi^{\overline{N}} \cdot \det(C_n)} \cdot e^{-\tilde{L}\left(\underline{D}^{(k)}, \underline{h}^{(k)}, \underline{r}^{(k)}\right)} \quad \text{mit} \quad C_n = \sigma_n^2 \cdot I_n \tag{10}$$

$$\overline{N} = k - L_t + 1 \tag{11}$$

Unter Berücksichtigung der mathematischen Beziehungen in den Gleichungen (9) bis (11) kann die mathematische Beziehung für die logarithmierte bedingte Wahrscheinlichkeit $\ln P(\underline{D}^{(k)}|\underline{r})$ ausgehend von Gleichung (8) nach Gleichung (12) überführt werden.

$$\ln(P(\underline{D}^{(k)} \mid \underline{r}) \approx \ln f_{\underline{R}^{(k)}|\underline{D}^{(k)}}(\underline{r}^{(k)} \mid \underline{D}^{(k)})$$
$$= -\tilde{L}\left(\underline{D}^{(k)}, \underline{h}^{(k)}, \underline{r}^{(k)}\right) - (k - L_t + 1)\ln \pi - \ln \sigma_n^2 \tag{12}$$

Die Log-Likelihood-Funktion $\tilde{L}(\underline{D}^{(k)}, \underline{h}^{(k)}, \underline{r}^{(k)})$ ergibt sich in Anlehnung an Kammeyer, K.D.: "Nachrichtenübertragung", Teubner-Verlag, 1996, Seite 554-555, gemäß Gleichung (13):

$$\tilde{L}\left(\underline{D}^{(k)},\underline{h}^{(k)},\underline{r}^{(k)}\right)=\frac{1}{\sigma_n^2}\left(\underline{r}^{(k)}-\underline{D}^{(k)}\cdot\underline{h}^{(k)}\right)^H\cdot\left(\underline{r}^{(k)}-\underline{D}^{(k)}\cdot\underline{h}^{(k)}\right) \qquad (13)$$

Da die beiden letzten Terme in Gleichung (12) lediglich Parameter enthalten, sind sie für die Maximierung der bedingten Wahrscheinlichkeit $P(\underline{D}^{(k)}|\underline{r})$ nicht wesentlich und können vernachlässigt werden. Die bedingte Wahrscheinlichkeit $P(\underline{D}^{(k)}|\underline{r})$ wird folglich maximiert, wenn die Log-Likelihood-Funktion $\tilde{L}(\underline{D}^{(k)},h^{(k)},r^{(k)})$ minimiert wird.

Die mathematische Beziehung für die bedingte Wahrscheinlichkeit $P(\underline{D}^{(k)}|\underline{r})$ in Gleichung (13) kann ausgehend von Träger, J.: "Kombinierte Kanalschätzung und Dekodierung für Mobilfunkkanäle", ISBN 3-8265-4336-X, Shaker-Verlag, Aachen, 1993, entsprechend Gleichung (14) umgeformt werden.

$$\tilde{L}\left(\underline{D}^{(k)},\underline{h}^{(k)},\underline{r}^{(k)}\right)$$
$$=\left[\underline{h}^{(k)}-\left(\underline{D}^{(k)H}\underline{D}^{(k)}\right)^{-1}\underline{D}^{(k)H}\underline{r}^{(k)}\right]^H$$
$$\left(\underline{D}^{(k)H}\underline{C}_n^{-1}\underline{D}^{(k)}\right)\left[\underline{h}^{(k)}-\left(\underline{D}^{(k)H}\underline{D}^{(k)}\right)^{-1}\underline{D}^{(k)H}\underline{r}^{(k)}\right]$$
$$-\underline{r}^{(k)H}\underline{C}_n^{-1}\underline{D}^{(k)}\left(\underline{D}^{(k)H}\underline{C}_n^{-1}\underline{D}^{(k)}\right)^{-1}\underline{D}^{(k)H}\underline{C}_n^{-1}\underline{r}^{(k)}+\underline{r}^{(k)H}\underline{C}_n^{-1}\underline{r}^{(k)} \qquad (14)$$

Hierbei kommt eine Schätzung der Kanalimpulsantwort $\underline{h}^{(k)}$ nach dem RLS-Algorithmus - Reduced-Least-Squares-Algorithmus - gemäß Gleichung (15) zum Einsatz.

$$\hat{\underline{h}}^{(k)}=\left(\underline{D}^{(k)H}\underline{D}^{(k)}\right)^{-1}\cdot\underline{D}^{(k)H}\cdot\underline{r}^{(k)} \qquad (15)$$

Wie unschwer zu erkennen ist, wird die quadratische Form des ersten Terms

$$\left[\underline{h}^{(k)}-\left(\underline{D}^{(k)H}\underline{D}^{(k)}\right)^{-1}\underline{D}^{(k)H}\underline{r}^{(k)}\right]^H\left(\underline{D}^{(k)H}\underline{C}_n^{-1}\underline{D}^{(k)}\right)\left[\underline{h}^{(k)}-\left(\underline{D}^{(k)H}\underline{D}^{(k)}\right)^{-1}\underline{D}^{(k)H}\underline{r}^{(k)}\right]$$

der Log-Likelihood-Funktion $\tilde{L}(\underline{D}^{(k)},\underline{h}^{(k)},\underline{r}^{(k)})$ durch den dabei verwendeten RLS-Algorithmus minimiert.

Da desweiteren der dritte Term $\underline{r}^{(k)H}\underline{C}_n^{-1}\underline{r}^{(k)}$ der Log-Likelihood-Funktion $\tilde{L}(\underline{D}^{(k)},\underline{h}^{(k)},\underline{r}^{(k)})$ weder eine Abhängigkeit von der Kanalimpulsantwort $\underline{h}^{(k)}$ noch von der Toeplitz-Matrix $\underline{D}^{(k)}$ aufweist, kann einzig die quadratische Form des zweiten Terms $\underline{r}^{(k)H}\underline{C}_n^{-1}\underline{D}^{(k)}\left(\underline{D}^{(k)H}\underline{C}_n^{-1}\underline{D}^{(k)}\right)^{-1}\underline{D}^{(k)H}\underline{C}_n^{-1}\underline{r}^{(k)}$ der Log-Likelihood-Funktion $\tilde{L}(\underline{D}^{(k)},\underline{h}^{(k)},\underline{r}^{(k)})$ zur Schätzung des im Zeitpunkt $k$ gesendeten Datensymbols herangezogen werden. Hierzu wird die Pfadmetrik $M^{(k)}$ gemäß Gleichung (16) maximiert.

$$M^{(k)}=\underline{r}^{(k)H}\cdot\underline{D}^{(k)}\cdot\left(\underline{D}^{(k)H}\underline{D}^{(k)}\right)^{-1}\cdot\underline{D}^{(k)H}\cdot\underline{r}^{(k)} \qquad (16)$$

In Anlehnung an den Viterbi-Algorithmus muß die Pfadmetrik $M^{(k)}$ gemäß Gleichung (15) zur Schätzung des in jedem Zeitpunkt $k$ gesendeten Datensymbols für jeden Zustand in jedem Zeitpunkt $k$ berechnet werden. Da die Berechnung jeder einzelnen Pfadmetrik $M^{(k)}$ zu komplex ist, wird im folgenden für das erfindungsgemäße Verfahren zur Entzerrung einer über einen zeitveränderlichen Übertragungskanal empfangenen Datensymbol-Sequenz eine iterative Pfadmetrik $\tilde{M}^{(k)}$ zur Maximum-Likelihood-Schätzung des im Zeitpunkt $k$ gesendeten Datensymbols und ein iterativer Maximum-Likelihood-Schätzwert $\hat{h}^{(k)}$ für die Kanalimpulsantwort im Zeitpunkt $k$ hergeleitet.

Die Iteration erfolgt in beiden Fällen über jeden einzelnen Zeitpunkt $k$ von Datensymbol zu Datensymbol. Generell ist in jedem Zeitpunkt $k$ die Toeplitz-Matrix $\underline{D}^{(k)}$ zuerst iterativ zu schätzen und auf der Basis der iterativ geschätzten Toeplitz-Matrix $\underline{D}^{(k)}$ die Kanalimpulsantwort $\hat{\underline{h}}^{(k)}$ iterativ zu schätzen, die wiederum zur iterativen Schätzung

der Toeplitz-Matrix $\underline{D}^{(k+1)}$ im nächsten Zeitpunkt $k+1$ herangezogen wird. Alternativ kann die Iteration des Schätzwerts $\hat{\underline{h}}^{(k)}$ der Kanalimpulsantwort auch über mehrere Datensymbole erfolgen.

Zur Entwicklung einer jeweils unabhängigen Iteration für den Schätzwert $\hat{\underline{h}}^{(k)}$ und für die Pfadmetrik $\tilde{M}^{(k)}$ bei Berücksichtigung des zuletzt iterativ ermittelten Schätzwertes der jeweils anderen Schätzgröße werden in einem Zwischenschritt für die Berechnung des Schätzwertes $\hat{\underline{h}}^{(k)}$ der Kanalimpulsantwort gemäß Gleichung (15) die beiden Hilfsgrössen $\underline{v}^{(k)}$ gemäß Gleichung (17) und $\mathbb{D}^{(k)}$ gemäß Gleichung (18) eingeführt.

$$\underline{v}^{(k)} = \underline{D}^{(k)^H} \cdot \underline{r}^{(k)} \qquad (17)$$

$$\mathbb{D}^{(k)} = \underline{D}^{(k)^H} \cdot \underline{D}^{(k)} \qquad (18)$$

Der Schätzwert $\hat{\underline{h}}^{(k)}$ der Kanalimpulsantwort kann somit unter Berücksichtigung der Hilfsgrößen $\underline{v}^{(k)}$ und $\mathbb{D}^{(k)}$ entsprechend Gleichung (19) ermittelt werden.

$$\hat{\underline{h}}^{(k)} = \mathbb{D}^{(k)^{-1}} \underline{v}^{(k)} \qquad (19)$$

Die beiden Hilfsgrößen - Vektor $\underline{v}^{(k)}$ und Matrix $\mathbb{D}^{(k)}$ - lassen sich jeweils iterativ gemäß Gleichung (20) und (21) berechnen:

$$\underline{v}^{(k)} = \underline{v}^{(k-1)} + \underline{d}^{(k)^{\bullet}} \cdot r(k) \qquad (20)$$

$$\mathbb{D}^{(k)} = \mathbb{D}^{(k-1)} + \underline{d}^{(k)^{\bullet}} \cdot \underline{d}^{(k)^T} \qquad (21)$$

Da die Datensymbol-Sequenz
$\underline{d}^{(k)} = [d(k), d(k-1), d(k-2), ..., d(k-(L_h-1))]^T$ abhängig vom Zeitpunkt $k$ und von der Impulslänge $L_h$ der Kanalimpulsantwort u.U. Datensymbole mit negativem Index aufweisen, sind diese geeignet zu initialisieren (z.B. $d(k) = 0 \;\forall k < 0$).

Unter Anwendung des Matrix-Inversionslemma in Anlehnung an Kammeyer, K.D.: "Nachrichtenübertragung", Teubner-Verlag, 1996, Seite 729 - 730, ergibt sich die inverse Matrix $\mathbb{D}^{(k)^{-1}}$ der Matrix $\mathbb{D}^{(k)}$ entsprechend Gleichung (22) unter Verwendung der Kalman-Verstärkung $g^{(k)}$ gemäß Gleichung (23) :

$$\mathbb{D}^{(k)^{-1}} = \mathbb{D}^{(k-1)^{-1}} - g^{(k)} \cdot d^{(k)^T} \cdot \mathbb{D}^{(k-1)^{-1}} \qquad (22)$$

$$g^{(k)} = \mathbb{D}^{(k-1)^{-1}} \cdot d^{(k)^{\bullet}} \cdot (1 + d^{(k)^T} \cdot \mathbb{D}^{(k-1)^{-1}} \cdot d^{(k)^{\bullet}})^{-1} \qquad (23)$$

Gleichung (22) kann nach Gleichung (24) und Gleichung (23) kann unter Berücksichtigung von Gleichung (24) nach Gleichung (25) mathematisch umgeformt werden.

$$\mathbb{D}^{(k-1)^{-1}} \cdot d^{(k)^{\bullet}} = g^{(k)} \cdot (1 + d^{(k)^{\bullet}} \cdot \mathbb{D}^{(k-1)^{-1}} \cdot d^{(k)^{\bullet}}) \qquad (24)$$

$$\mathbb{D}^{(k)^{-1}} \cdot d^{(k)^{\bullet}} = g^{(k)} \cdot (1 + d^{(k)^T} \cdot \mathbb{D}^{(k-1)^{-1}} \cdot d^{(k)^{\bullet}}) - g^{(k)} \cdot d^{(k)^T} \cdot \mathbb{D}^{(k-1)^{-1}} \cdot d^{(k)^{\bullet}} \qquad (25)$$

Aus Gleichung (25) ergibt sich schließlich die mathematische Beziehung der Kalman-Verstärkung $g^{(k)}$ gemäß Gleichung (26):

$$g^{(k)} = \mathbb{D}^{(k)^{-1}} \cdot d^{(k)^{\bullet}} \qquad (26)$$

Die iterative Berechnung des Schätzwerts $\hat{\underline{h}}^{(k)}$ der Kanalimpulsantwort ergibt sich ausgehend von Gleichung (19) unter Berücksichtigung von Gleichung (20), (22) und (26) entsprechend Gleichung (27):

$$\hat{\underline{h}}^{(k)} = \hat{\underline{h}}^{(k-1)} + g^{(k)} \cdot \left( r(k) - \hat{\underline{d}}^{(k)^T} \cdot \hat{\underline{h}}^{(k-1)} \right) \qquad (27)$$

Unter Einführung des a-priori-Schätzfehlers $e^{(k|k-1)}$ zwischen der empfangenen Datensymbol-Sequenz $r(k)$ und der Schätzung $\hat{d}^{(k)T} \cdot \hat{h}^{(k-1)}$ der empfangenen Datensymbol-Sequenz $d^{(k)T} \cdot \hat{h}^{(k-1)}$, die sich aus der mit der zum vorherigen Zeitpunkt $k$-1 geschätzten Kanalimpulsantwort $\hat{h}^{(k-1)}$ gewichteten und der Schätzung $\hat{d}^{(k)}$ der bis zum Zeitpunkt $k$ gesendeten Datensymbol-Sequenz $d^{(k)}$ ergibt, kann die iterative Berechnungsformel für den Schätzwert $\hat{h}^{(k)}$ der Kanalimpulsantwort gemäß Gleichung (28) ausgehend von Gleichung (27) nach Gleichung (29) umgeformt werden.

$$e^{(k|k-1)} = r(k) - \hat{\underline{d}}^{(k)^T} \cdot \hat{\underline{h}}^{(k-1)} \qquad (28)$$

$$\hat{\underline{h}}^{(k)} = \hat{\underline{h}}^{(k-1)} + g^{(k)} \cdot e^{(k|k-1)} \qquad (29)$$

Die iterative Berechnung der Pfadmetrik $\tilde{M}^{(k)}$ zur Maximum-Likelihood-Schätzung des im Zeitpunkt $k$ gesendeten Datensymbols $d(k)$ ergibt sich ausgehend von Gleichung (16) unter Berücksichtigung der mathematischen Beziehung für die Hilfsgröße $\underline{v}^{(k)}$ in Gleichung (17) und der mathematischen Beziehung für den Schätzwert $\hat{\underline{h}}^{(k)}$ der Kanalimpulsantwort in Gleichung (19) entsprechend Gleichung (30) :

$$\tilde{M}^{(k)} = \underline{v}^{(k)H} \, \hat{\underline{h}}^{(k)} \qquad (30)$$

Gleichung (30) läßt sich unter Berücksichtigung der iterativen Berechnungsformel für die Hilfsgröße $\underline{v}^{(k)}$ in Gleichung (20) und für den Schätzwert $\hat{\underline{h}}^{(k)}$ der Kanalimpulsantwort in Gleichung (29) nach Gleichung (30') mathematisch umformen:

$$\tilde{M}^{(k)} = \left( \underline{v}^{(k-1)H} + r(k)^* \hat{\underline{d}}^{(k)T} \right) \left( \hat{\underline{h}}^{(k-1)} + \underline{g}^{(k)} e^{(k|k-1)} \right) \qquad (30')$$

Gleichung (30') kann unter Berücksichtigung der mathematischen Beziehung für den Kalman-Verstärkungsfaktor $g^{(k)}$ in Gleichung (26) und der iterativen Berechnungsformel für die Hilfsgröße $\underline{v}^{(k)}$ in Gleichung (20) nach Gleichung (30") umgeformt werden.

$$\tilde{M}^{(k)} = \underline{v}^{(k-1)H} \hat{\underline{h}}^{(k-1)} + r(k)^* \hat{\underline{d}}^{(k)T} \hat{\underline{h}}^{(k-1)} + \underline{v}^{(k)H} \mathbb{D}^{(k)-1} \hat{\underline{d}}^{(k)*} e^{(k|k-1)} \qquad (30'')$$

Der erste Term in Gleichung (30") entspricht der Pfadmetrik $\tilde{M}^{(k-1)}$ zum vorherigen Zeitpunkt $k$-1. Der Term

$$\underline{v}^{(k)H} \mathbb{D}^{(k)-1}$$

in Gleichung (30") kann gemäß Gleichung (29) durch den Schätzwert $\hat{\underline{h}}^{(k)}$ der Kanalimpulsantwort ersetzt werden. Schließlich wird die rechte Seite der Gleichung (30") um das Betragsquadrat der empfangenen Datensymbol-Sequenz $|r(k)|^2$ und um den betragsgleichen negativen Term $- r(k)^* \cdot r(k)$ erweitert. Somit entsteht die in Gleichung (30''') dargestellte iterative Berechnungsformel für die Pfadmetrik $\tilde{M}^{(k)}$.

$$\tilde{M}^{(k)} = \tilde{M}^{(k-1)} - r(k)^* \cdot \left( r(k) - \hat{\underline{d}}^{(k)T} \cdot \hat{\underline{h}}^{(k-1)} \right) + \hat{\underline{h}}^{(k)} \cdot \hat{\underline{d}}^{(k)*} \cdot e^{(k|k-1)} + \left| r(k) \right|^2$$

$$(30''')$$

Unter Berücksichtigung des a-priori-Schätzfehlers $e^{(k|k-1)}$ gemäß Gleichung (28) kann Gleichung (30''') nach Gleichung (30'''') überführt werden.

$$\tilde{M}^{(k)} = \tilde{M}^{(k-1)} - (r(k)^* - \hat{\underline{h}}^{(k)} \cdot \hat{\underline{d}}^{(k)^*}) \cdot e^{(k|k-1)} + \left| r(k) \right|^2 \qquad (30''''')$$

Führt man den a-posteriori-Schätzfehlers $e^{(k|k)}$ zwischen der empfangenen Datensymbol-Sequenz $r(k)$ und der Schätzung $\hat{\underline{d}}^{(k)T} \cdot \hat{\underline{h}}^{(k)}$ der empfangenen Datensymbol-Sequenz $\underline{d}^{(k)T} \cdot \underline{h}^{(k)}$ ein, die sich aus der mit der zum Zeitpunkt $k$ geschätzten Kanalimpulsantwort $\hat{\underline{h}}^{(k)}$ gewichteten und bis zum Zeitpunkt $k$ gesendeten Datensymbol-Sequenz $\hat{\underline{d}}^{(k)T}$ gemäß Gleichung (31) ein, so läßt sich die iterative Berechnungsformel für die Pfadmetrik $\tilde{M}^{(k)}$ zur Maximum-Likelihood-Schätzung des im Zeitpunkt $k$ gesendeten Datensymbols $d(k)$ nach Gleichung (30'''') mathematisch darstellen.

$$e^{(k|k)} = r(k) - \hat{\underline{d}}^{(k)T} \cdot \hat{\underline{h}}^{(k)} \qquad (31)$$

$$\tilde{M}^{(k)} = \tilde{M}^{(k-1)} - e^{(k|k)^*} \cdot e^{(k|k-1)} + \left| r(k) \right|^2 \qquad (30'''''')$$

Da der Term $|r(k)|^2$ in der iterativen Berechnungsformel für die Pfadmetrik $\tilde{M}^{(k)}$ in Gleichung (30'''''') keine Schätzgröße ist und damit zur Entscheidungsfindung im Trellis-Diagramm nicht signifikant ist, kann er vernachlässigt werden, so dass aus Gleichung (30'''''') in Gleichung (32) überführt werden kann.

$$\tilde{M}^{(k)} = \tilde{M}^{(k-1)} - e^{(k|k)^*} \cdot e^{(k|k-1)} \qquad (32)$$

Die inverse Matrix $\mathbb{D}^{(k)^{-1}}$ der Matrix $\mathbb{D}^{(k)}$ wird als Prädiktionsfehler-Korrelationsmatrix $K^{(k)}$ bezeichnet. Unter Einführung der Prädiktionsfehler-Korrelationsmatrix $K^{(k)}$ läßt sich Gleichung (22) in Gleichung (33) und Gleichung (23) in Gleichung (34) überführen.

$$K^{(k)} = K^{(k-1)} - g^{(k)} \cdot \hat{\underline{d}}^{(k)^T} \cdot K^{(k-1)} \qquad (33)$$

$$g^{(k)} = K^{(k-1)} \cdot \hat{\underline{d}}^{(k)^*} \cdot (1 + \hat{\underline{d}}^{(k)^T} \cdot K^{(k-1)} \cdot \hat{\underline{d}}^{(k)^*})^{-1} \qquad (34)$$

Aufgrund der Zeitvarianz des Übertragungskanals haben früher gesendete Datensymbole eine geringere Bedeutung auf das Entzerrungsergebnis des aktuell empfangenen Datensymbols $r(k)$ als aktuell gesendete Datensymbole. Durch Einführung eines Vergessensfaktors $\mu$ mit einem Wertebereich $0 < \mu \leq 1$ wird dieser Umstand berücksichtigt. Die Iterationsformeln für die beiden Hilfsgrößen - Vektor $\underline{v}^{(k)}$ und Matrix $\mathbb{D}^{(k)}$ - in den Gleichungen (20) und (21) lassen sich unter Berücksichtigung des Vergessensfaktors $\mu$ in die entsprechenden Gleichungen (35) und (36) überführen.

$$\underline{v}^{(k)} = \mu \cdot \underline{v}^{(k-1)} + \underline{d}^{(k)^*} \cdot r(k) \qquad (35)$$

$$\mathbb{D}^{(k)} = \mu \cdot \mathbb{D}^{(k-1)} + \underline{d}^{(k)^*} \cdot \underline{d}^{(k)^T} \qquad (36)$$

Die Gleichung (32) zur iterativen Berechnung der Pfadmetrik $\tilde{M}^{(k)}$ geht bei Berücksichtigung des Vergessensfaktors $\mu$ in die Gleichung (37) über.

$$\tilde{M}^{(k)} = \mu \cdot \tilde{M}^{(k-1)} - e^{(k|k)^*} \cdot e^{(k|k-1)} \qquad (37)$$

Analog geht die Gleichung (33) zur iterativen Berechnung Prädiktionsfehler-Korrelationsmatrix $K^{(k)}$ bei Berücksichtigung des Vergessensfaktors $\mu$ in die Gleichung (38) über.

$$K^{(k)} = \frac{1}{\mu} \cdot \left[ K^{(k-1)} - g^{(k)} \cdot \hat{\underline{d}}^{(k)^T} \cdot K^{(k-1)} \right] \qquad (38)$$

Schließlich geht auch die Gleichung (34) zur iterativen Berechnung der Kalman-Verstärkung $g^{(k)}$ bei Berücksichtigung des Vergessensfaktors $\mu$ in die Gleichung (39) über.

$$g^{(k)} = K^{(k-1)} \cdot \underline{\hat{d}}^{(k)^\bullet} \cdot (\mu + \underline{\hat{d}}^{(k)^T} \cdot K^{(k-1)} \cdot \underline{\hat{d}}^{(k)^\bullet})^{-1} \qquad (39)$$

Ändert sich die Kanalimpulsantwort $\underline{h}^{(k)}$ vom vorherigen Zeitpunkt $k$-1 zum aktuellen Zeitpunkt $k$ nur geringfügig, so ist der a-priori-Schätzfehler $e^{(k|k-1)}$ und der a-posteriori-Schätzfehler $e^{(k|k)}$ näherungsweise identisch. Der Term $e^{*(k|k)} \cdot e^{(k|k-1)}$ ist folglich reellwertig positiv und die Pfadmetrik $\tilde{M}^{(k)}$ in Gleichung (37) ist entsprechend reellwertig negativ, da die maximale Pfadmetrik $\tilde{M}^{(k)}$ aus allen reellwertigen negativen Pfadmetriken $\tilde{M}^{(k)}$ der minimalen Pfadmetrik $\tilde{M}^{(k)}$ aus allen reellwertigen positiven Pfadmetriken $\tilde{M}^{(k)}$ entspricht, vorausgesetzt der Betrag $|\tilde{M}^{(k)}|$ der zueinander korrespondierenden positiven und negativen Pfadmetriken $\tilde{M}^{(k)}$ ist gleich groß. Somit kann eine Maximierung der Pfadmetrik $\tilde{M}^{(k)}$ gemäß Gleichung (37) in eine Minimierung der Pfadmetrik $\tilde{M}^{(k)}$ gemäß Gleichung (40) unter Verwendung einer Betragsbildungsfunktion oder Gleichung (41) unter Verwendung einer Realteilbildungsfunktion überführt werden.

$$\tilde{M}^{(k)} = \left| \mu \cdot \tilde{M}^{(k-1)} - e^{(k|k)^*} \cdot e^{(k|k-1)} \right| \qquad (40)$$

$$\tilde{M}^{(k)} = Re\left\{ \mu \cdot \tilde{M}^{(k-1)} - e^{(k|k)^*} \cdot e^{(k|k-1)} \right\} \qquad (41)$$

Eine zu Gleichung (40) bzw. (41) äquivalente Berechnungsformel für eine zu minimierende Pfadmetrik $\tilde{M}^{(k)}$ ergibt sich durch Betragsbildung des Terms $e^{*(k|k)} \cdot e^{(k|k-1)}$ und anschließender Addition zu der im vorhergehenden Zeitpunkt $k$-1 berechneten Pfadmetrik $\tilde{M}^{(k-1)}$ gemäß Gleichung (42) oder durch Realteilbildung des Terms $e^{*(k|k)} \cdot e^{(k|k-1)}$ und anschließender Addition zu der im vorhergehenden Zeitpunkt $k$-1 berechneten Pfadmetrik $\tilde{M}^{(k-1)}$ gemäß Gleichung (43).

$$\tilde{M}^{(k)} = \mu \cdot \tilde{M}^{(k-1)} + \left| e^{(k|k)^*} \cdot e^{(k|k-1)} \right| \qquad (42)$$

$$\tilde{M}^{(k)} = \mu \cdot \tilde{M}^{(k-1)} + Re\left\{ e^{(k|k)^*} \cdot e^{(k|k-1)} \right\} \qquad (43)$$

Für die Berechnung der Pfadmetrik $\tilde{M}^{(k)}$ kann anstelle des Produkts aus dem a-priori-Schätzfehler $e^{(k|k-1)}$ zum vorherigen Zeitpunkt $k$-1 und dem a-posteriori-Schätzfehler $e^{(k|k)}$ zum aktuellen Zeitpunkt $k$ alternativ ein Produkt aus einem a-priori-Schätzfehler bzw. a-posteri-Schätzfehler $e^{(k|k-n)}$ zum Zeitpunkt $n$ gemäß Gleichung (44) und aus einem a-priori-Schätzfehler bzw. a-posteri-Schätzfehler $e^{(k|k-m)}$ zum Zeitpunkt $m$ in den Ausführungsformen der Gleichungen (45), (46), (47) und (48) verwendet werden, wobei die Zeitpunkte $n$ und $m$ ganzzahlige, positive Werte - $0 \le m,n$, $n,m \in \mathbb{N}_0$ - sind. Die Zeitpunkte $n$ und $m$ sind in Abhängigkeit der Zeitveränderlichkeit des Übertragungskanals zu wählen. Bei hoher Zeitveränderlichkeit sind relativ kleine Werte für die Zeitpunkte $n$ und $m$ geeignet.

$$e(k \mid k - n) = r(k) - \underline{\hat{d}}^{(k)^T} \underline{\hat{h}}^{(k-n)} \qquad (44)$$

$$\tilde{M}^{(k)} = \left| \mu \cdot \tilde{M}^{(k-1)} - e^{(k|k-n)^*} \cdot e^{(k|k-m)} \right| \qquad (45)$$

$$\tilde{M}^{(k)} = Re\left\{ \mu \cdot \tilde{M}^{(k-1)} - e^{(k|k-n)^*} \cdot e^{(k|k-m)} \right\} \qquad (46)$$

$$\tilde{M}^{(k)} = \mu \cdot \tilde{M}^{(k-1)} + \left| e^{(k|k-n)^*} \cdot e^{(k|k-m)} \right| \qquad (47)$$

$$\tilde{M}^{(k)} = \mu \cdot \tilde{M}^{(k-1)} + Re\left\{ e^{(k|k-n)^*} \cdot e^{(k|k-m)} \right\} \qquad (48)$$

Die Produkte aus den a-priori- und a-posteriori-Schätzfehlern in den Gleichungen (40) bis (43) und (45) bis (48) zur Berechnung der Pfadmetrik $\tilde{M}^{(k)}$ stellen die Zweigmetriken zwischen den jeweiligen Zuständen zum vorherigen Zeitpunkt $k$-1 und zum aktuellen Zeitpunkt $k$ dar.

Aus den Berechnungsformeln des a-priori- und des a-posteriori-Schätzfehlers in den Gleichungen (28), (31) und (44) sowie der iterativen Berechnungsformel für den Schätzwert $\hat{h}^{(k)}$ der Kanalimpulsantwort in Gleichung (29) ist ersichtlich, dass zur Berechnung der Pfadmetrik $\tilde{M}^{(k)}$ für die einzelne Zustände $S_i, i=1,...,N_s$ im Zeitpunkt $k$ die Schätzwerte $\hat{h}^{(k-1)}$ zum vorherigen Zeitpunkt $k$-1 bzw. $\hat{h}^{(k-n)}$ zum Zeitpunkt $k$-$n$ erforderlich sind.

Während bei einem Viterbi-Algorithmus bei einer Mächtigkeit $M$ des Symbolalphabets des verwendeten Modulationsverfahren und insgesamt $N_s$ Zuständen jeweils insgesamt $M \cdot N_s$ potentielle neue Zustände im aktuellen Zeitpunkt analysiert werden und je potentiell neuen Zustand jeweils eine Schätzung der Kanalimpulsantwort im aktuellen Zeitpunkt erforderlich ist und somit insgesamt $M \cdot N_s$ Kanalschätzungen durchgeführt werden, müssen beim erfindungsgemäßen Verfahren zur Analyse der insgesamt $M \cdot N_s$ potentiellen neuen Zustände im aktuellen Zeitpunkt lediglich die Kanlimpulsantworten zu den insgesamt $N_s$ Vorläuferzuständen im vorhergehenden Zeitpunkt $k$-1 bzw. in einem noch früheren Zeitpunkt $k$-2, $k$-3 usw. geschätzt werden.

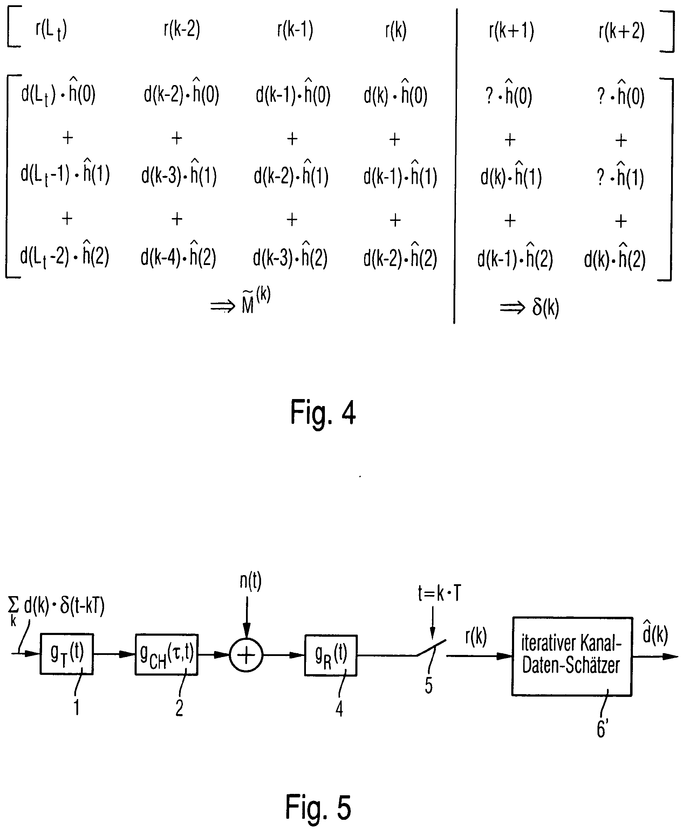

Aufgrund der Faltung der Datensymbol-Sequenz $\underline{d}^{(k)} = [d(k),d(k\text{-}1),d(k\text{-}2),...,d(k\text{-}(L_h\text{-}1))]^T$ mit dem Vektor $\underline{h}^{(k)}$ der Impulsantwort des Übertragungskanals im zeitinvarianten bzw. zeitvarianten Signalmodell des Übertragungskanals gemäß Gleichung (1) enthält die Log-Likelihood-Funktion $\tilde{L}(\underline{D}^{(k)},\underline{h}^{(k)},\underline{r}^{(k)})$ gemäß Gleichung (14) und die Pfadmetrik $M^{(k)}$ gemäß Gleichung (16) in zukünftigen Zeitpunkten $k$ in den einzelnen Termen $d(i) \cdot h(j)$ auch Datensymbole $d(i)$ von aktuellen bzw. vergangenen Zeitpunkten $i \lesssim k$, wie aus der rechte Hälfte der Fig. 4 ersichtlich ist. Damit die Energie dieser Signalanteile bei der iterativen Berechnung der Pfadmetrik $M^{(k)}$ und des Schätzwerts $\hat{h}^{(k)}$ der Kanalimpulsantwort nicht verloren geht und zu einer ungenügenden Schätzung der bis zum Zeitpunkt $k$ gesendeten Datensymbol-Sequenz $\underline{d}^{(k)}$ und der Kanalimpulsantwort $\underline{h}^{(k)}$ führt, wird im folgenden eine erweiterte Pfadmetrik $\overline{\overline{M}}^{(k)}$ entwickelt, die die in zukünftigen Zeitpunkten $i>k$ in die empfangenen Datensymbole $\underline{r}^{(i)}$ eingehenden Signalanteile dieser bis zum Zeitpunkt $k$ gesendeten Datensymbol-Sequenz $\underline{d}^{(k)}$ berücksichtigt.

Hierzu wird wieder das zeitinvariante Signalmodell des Übertragungskanals gemäß Gleichung (1) betrachtet. Bei einer Impulslänge $L_h$ der Kanalimpulsantwort können in insgesamt $L_h$ - 1 zukünftigen Zeitpunkten Signalanteile von bis zum Zeitpunkt $k$ gesendeten Datensymbolen in empfangenen Datensymbolen $r(k)$ enthalten sein. Der Vektor $\underline{r}^{(k)}$ der empfangenen Datensymbole aus Gleichung (2) erweitert sich gemäß Gleichung (49) zu einem Vektor $\underline{r}^{(k+L_h\text{-}1)}$.

$$\underline{r}^{(k+L_h-1)} = \left[\underline{r}^{(k)^T}, \overline{\underline{r}}^{(k)^T}\right]^T \quad \text{mit} \quad \overline{\underline{r}}^{(k)^T} = \left[r((k+1),...,r(k+L_h-1)\right]^T \qquad (49)$$

Die Toeplitz-Matrix $\underline{D}^{(k)}$ aus Gleichung (5) erweitert sich entsprechend zu einer Toeplitz-Matrix $\underline{D}^{(k+L_h\text{-}1)}$ gemäß Gleichung (50):

$$\underline{D}^{(k+L_h-1)} = \begin{bmatrix} & & \underline{D}^{(k)} & \\ d(k+1) & d(k) & ... & d(k-(L_h-2)) \\ \vdots & \vdots & ... & \vdots \\ d(k+L_h-1) & d(k+L_h-2) & ... & d(k) \end{bmatrix} \qquad (50)$$

Die Log-Likelihood-Funktion $\tilde{L}(\underline{D}^{(k)},\underline{h}^{(k)},\underline{r}^{(k)})$ aus Gleichung (13) erweitert sich dementsprechend zu einer erweiterten Log-Likelihood-Funktion $\overline{\overline{L}}(\underline{D}^{(k+L_h\text{-}1)},\hat{\underline{h}}^{(k)},\underline{r}^{(k+L_h\text{-}1)})$ gemäß Gleichung (51) :

$$\overline{\overline{L}}\left(\underline{D}^{(k+L_h-1)},\hat{\underline{h}}^{(k)},\underline{r}^{(k+L_h-1)}\right) = E\left\{\left(\underline{r}^{(k+L_h-1)} - \underline{D}^{(k+L_h-1)} \cdot \hat{\underline{h}}^{(k)}\right)^H \cdot \overline{C}_n^{-1} \cdot \left(\underline{r}^{(k+L_h-1)} - \underline{D}^{(k+L_h-1)} \cdot \hat{\underline{h}}^{(k)}\right)\right\}$$

$$(51)$$

Die fehlende Kenntnis über die in zukünftigen Zeitpunkten empfangenen Datensymbole $\{r(i)\}_{i=k+1}^{k+L_h-1}$ und über die in zukünftigen Zeitpunkten gesendeten Datensymbole $\{d(i)\}_{i=k+1}^{k+L_h-1}$ findet in Gleichung (51) gegenüber der mathematischen Darstellung der Log-Likelihood-Funktion $\tilde{L}(\underline{D}^{(k)},\underline{h}^{(k)},\underline{r}^{(k)})$ in Gleichung (13) durch Einführung der Erwartungswertfunktion $E\{.\}$ Berücksichtigung. Zusätzlich wird in Gleichung (51) die Impulsantwort $\underline{h}^{(k)}$ des Übertragungskanals aus Gleichung (13) durch ihren Schätzwert $\hat{\underline{h}}^{(k)}$ ersetzt.

Bei der Ermittlung der Kovarianzmatrix $\overline{C}_n$ ist zu berücksichtigen, daß sich diese nicht nur aus der Rauschleistung $\sigma_n{}^2$ des Rauschsignals gemäß Gleichung (11), sondern auch aus der Signalleistung der Signalanteile $d(i) \cdot h(j - i)$ der zukünftig gesendeten Datensymbole $d(i)$ mit $k + 1 \leq i \leq k + L_h$ - 1 zusammensetzt, die im empfangenen Datensymbol $r(j)$ mit $i \leq j \leq k + L_h$ - 1 enthalten sind - Datensymbole mit "?"-Symbol in Fig. 4 - und trotz ihrer Unbekanntheit zum Zeitpunkt $k$ die Schätzung der bis zum Zeitpunkt $k$ gesendeten Datensymbol-Sequenz $\underline{d}^{(k)}$ mit Hilfe der erweiterten Pfadmetrik $\overline{M}^{(k)}$ verfälschen. Die Signalleistung eines derartigen Signalanteils $d(i) \cdot h(j - i)$ ergibt sich unter der Voraussetzung, dass die mittlere Signalleistung des gesendeten Datensymbols $d(i)$ zu 1 angenommen wird, aus dem Betragsquadrat des entsprechenden Taps $|\hat{h}(j - i)|^2$ des Schätzwerts $\hat{\underline{h}}^{(k)}$ der Kanalimpulsantwort.

Somit läßt sich die Kovarianzmatrix $\overline{C}_n$ gemäß Gleichung (52) darstellen.

$$\overline{C}_n = diag(\sigma^2(i)) \quad \text{mit} \quad \sigma^2(i) = \begin{cases} \sigma^2{}_n & L_t \leq i \leq k \\ \sigma^2{}_n + \sum_{l=0}^{i-(k+1)} \left|\overline{\overline{h}}(l)\right|^2 & k+1 < i \leq L_h - 1 \end{cases}$$

$$(52)$$

Die Minimierung der erweiterten Log-Likelihood-Funktion $\overline{L}(\underline{D}^{(k+L_h-1)},\hat{\underline{h}}^{(k)},\underline{r}^{(k+L_h-1)})$ gemäß Gleichung (51) führt auf die erweiterte Pfadmetrik $\overline{\overline{M}}^{(k)}$ entsprechend Gleichung (53):

$$\overline{\overline{M}}^{(k)} = \frac{\tilde{M}^{(k)}}{\sigma^2} + \sum_{i=1}^{L_h-1} \left\{ \frac{\left|r(k+1) - \sum_{n=0}^{L_h-1-i} d(k-n)\cdot \hat{h}(i+n)\right|^2 + \sum_{n=0}^{i-1}\left|\hat{h}(n)\right|^2}{\sigma_n{}^2 + \sum_{n=0}^{i-1}\left|\hat{h}(n)\right|^2} \right\} \quad (53)$$

Die erweiterte Metrik $\overline{\overline{M}}^{(k)}$, ergibt sich also aus der Addition der nach einer der Gleichungen (40) bis (43) bzw. (45) bis (48) iterativ berechneten Metrik $\tilde{M}^{(k)}$, gewichtet mit der inversen Rauschleistung $\sigma^2$, und einem Erweiterungsterm $\delta(k)$, der dem Klammerausdruck der Gleichung (54) entspricht und die in den zukünftig empfangenen Datensymbolen $\{r(i)\}_{i=k+1}^{k+L_h-1}$ enthaltenen Signalanteile aus der bis zum aktuellen Zeitpunkt $k$ gesendeten Datensymbol-Sequenz $\underline{d}^{(k)}$ berücksichtigt, und läßt sich verkürzt gemäß Gleichung (54) darstellen.

$$\overline{\overline{M}}^{(k)} = \frac{\tilde{M}^{(k)}}{\sigma^2} + \delta(k) \quad (54)$$

Eine Gewichtung des Erweiterungsterm $\delta(k)$ zur iterativ berechneten Metrik $\tilde{M}^{(k)}$ kann durch Einführung eines Gewichtungsfaktors $w$, der additiver Metrik $\tilde{M}^{(k)}$ positiv und bei subtraktiver Metrik $\tilde{M}^{(k)}$ negativ ist, gemäß Gleichung (55) erzielt werden.

$$\overline{\overline{M}}^{(k)} = \frac{\tilde{M}^{(k)}}{\sigma^2} + w \cdot \delta(k) \quad (55)$$

In Fig.5 ist das Übertragungssystem für die Anwendung des erfindungsgemäßen Verfahrens zur Entzerrung einer über einen zeitveränderlichen Übertragungskanal empfangenen Datensymbol-Sequenz dargestellt, das gegenüber dem Übertragungssytem nach dem Stand der Technik in Fig. 1 kein Vorfilter 5 enthält und anstelle eines gemeinsamen Kanal-Daten-Schätzer 6 einen erfindungsgemäßen iterativen Schätzer 6' mit vollkommen entkoppelter Schätzung des Kanals und der gesendeten Datensymbol-Sequenz aufweist.

Das im erfindungsgemäßen iterativen Schätzer 6' implementierte erfindungsgemäße Verfahren zur Entzerrung einer über einen zeitveränderlichen Übertragungskanal empfangenen Datensymbol-Sequenz ergibt sich aus dem Flußdiagramm der Fig. 6.

Im ersten Verfahrensschritt S10 wird die Kanalimpulsantwort $h^{(k)}$ des Übertragungskanals in einer Erstkanalschätzung ermittelt. Hierzu wird der Übertragungskanal bevorzugt mit einer bekannten Trainingsdatensymbol-Sequenz der Länge $L_t$ beaufschlagt und aus dem empfangenen Datensymbol $r(k)$ unter Anwendung eines adaptiven Kanalschätzungsalgorithmuses ein Erstkanalschätzwert $\hat{h}^{(0)}$ der Kanalimpulsantwort $h^{(0)}$ zum Zeitpunkt 0 oder weiter zurückliegende Erstkanalschätzwerte $\hat{h}^{(-1)}$, $\hat{h}^{(-2)}$ des Übertragungskanals berechnet. Hierbei können Schätzalgorithmen ohne Berücksichtigung einer rauschbedingten Kanalstatistik wie beispielsweise Least-Squares-Algorithmen, Schätzalgorithmen mit Berücksichtigung einer rauschbedingten unbekannten Kanalstatistik wie beispielsweise Maximum-Likelihood-Verfahren oder Schätzalgorithmen mit Berücksichtigung einer rauschbedingten unbekannten Kanalstatistik wie beispielsweise der MMSE-Algorithmus Verwendung finden. Auch eine blinde oder semi-blinde Erstkanalschätzung ohne Verwendung einer Trainingsdatensymbol-Sequenz, die einzig aus der empfangenen Nutzdatensymbol-Sequenz den Kanal schätzt, eignet sich für die Erstkanalschätzung.

Im nächsten Verfahrensschritt S20 werden die im erfindungsgemäßen Verfahren verwendeten skalaren und vektoriellen Variablen sowie Matrizen-Variablen initialisiert:
Da abhängig vom Zeitpunkt $k$ und von der Impulslänge $L_h$ der Kanalimpulsantwort $h^{(k)}$ bestimmte Datensymbole $\hat{d}(i)$ des geschätzten Datensymbol-Sequenz-Vektors $\hat{d}^{(k)}$ in negativen Zeitpunkten $i$ liegen können, müssen diese vorab sinnvollerweise mit dem Wert 0 vorbelegt werden.

Die Elemente der Prädiktionsfehler-Korrelationsmatrix $K^{(k)}$, die die inverse Autokorrelationsmatrix der geschätzten Datensymbole $\hat{d}(i)$ darstellt, kann entweder mit konstanten Werten, beispielsweise mit dem groben Schätzwert $\gamma$ für

$$\frac{E_b}{N_0}$$

den Signal-Rauschabstand im Übertragungskanal, gewichtet mit der inversen Impulslänge $L_h^{-1}$ der Kanalimpulsantwort $h^{(k)}$, belegt werden oder aus den in der Erstkanalschätzung ermittelten Autokorrelationskoeffizienten der Trainingsdatensymbol-Sequenz oder der im Fall einer blinden Erstkanalschätzung benutzten Nutzdatensymbol-Sequenz berechnet werden.

Daraufhin beginnt die Iterationsschleife des erfindungsgemäßen Verfahrens mit Verfahrensschritt S30. In Verfahrensschritt S30 wird der a-priori-Schätzfehler $e^{(k|k-1)}$ unter Verwendung einer zum Zeitpunkt $k-1$ geschätzten Kanalimpulsantwort $\hat{h}^{(k-1)}$ gemäß Gleichung (28) und der a-posteriori-Schätzfehler $e^{(k|k)}$ unter Verwendung einer zum Zeitpunkt $k$ geschätzten Kanalimpulsantwort $\hat{h}^{(k)}$ gemäß Gleichung (31) berechnet. Alternativ kann auch jeder andere a-priori-Schätzfehler $e^{(k|k-n)}$ unter Verwendung einer zu einem früheren Zeitpunkt $k - n$ geschätzten Kanalimpulsantwort $\hat{h}^{(k-n)}$ gemäß Gleichung (44) berechnet werden.

Im Fall einer erstmaligen Durchführung des Verfahrensschritts S30 wird hierzu das im Zeitpunkt 0 empfangene Datensymbol r(0), der in Verfahrensschritt S20 vorbelegte Vektor der geschätzten Datensymbol-Sequenz $\hat{d}^{(0)}$ und der in der Erstkanalschätzung gemäß Verfahrensschritt S10 ermittelte Schätzwert $\hat{h}^{(0)}$, $\hat{h}^{(-1)}$, $\hat{h}^{(-2)}$ usw. der Kanalimpulsantwort $h^{(k)}$ zu den Zeitpunkten 0, -1, -2 usw. verwendet.

Im Fall einer bereits mehrmals durchlaufenen Iteration werden hierzu das im Zeitpunkt $k$ empfangene Datensymbol $r(k)$, die in Verfahrensschritt S60 in den einzelnen Zeitpunkten $k-1$, $k-2$, $k-3$ usw. jeweils geschätzten Datensymbole $\hat{d}(k-1)$, $\hat{d}(k-2)$, $\hat{d}(k-3)$ usw. der bis zum Zeitpunkt $k-1$ gesendeten Datensymbol-Sequenz $d^{(k)}$, für den Zeitpunkt $k$ jeweils jedes im Datensymbolalphabet des verwendeten Modulationsverfahrens enthaltene Datensymbol $d(k)$ und die in Verfahrensschritt S70 zum Zeitpunkt $k-1$ bzw. zu früheren Zeitpunkten $k-2$, $k-3$ usw. ermittelten Schätzwerte $\hat{h}^{(k-1)}$, $\hat{h}^{(t-2)}$, $\hat{h}^{(k-3)}$ usw. der Kanalimpulsantwort $h^{(k)}$ verwendet.

Im darauf folgenden Verfahrensschritt S40 wird die Metrik $\tilde{M}^{(0)}$ zum Zeitpunkt 0 im Fall eines erstmaligen Durchlaufens der Iteration und die Metrik $\tilde{M}^{(k)}$ zum Zeitpunkt $k$ im Fall eines schon mehrmaligen Durchlaufens der Iteration aus der initialisierten Metrik $\tilde{M}^{(-1)}$ im Fall eines erstmaligen Durchlaufens der Iteration und aus der im vorherigen Zeitpunkt $k-1$ iterativen ermittelten Metrik $\tilde{M}^{(k-1)}$ zuzüglich der jeweils für jedes mögliche Datensymbol $d(k)$ des Datensymbolalphabets zum Zeitpunkt $k$ ermittelten Zweigmetrik berechnet, die sich aus dem Produkt $e^{(k|k-1)} \cdot e^{(k|k)}$ des in Verfahrensschritt 30 berechneten a-priori-Schätzfehlers $e^{(k|k-1)}$ und a-posteriori-Schätzfehlers $e^{(k|k)}$ ermitteln lässt.

Hierbei kann die iterative Berechnungsformel für die Pfadmetrik $\tilde{M}^{(k)}$ der Gleichung (42), die iterative Berechnungsformel für die Pfadmetrik $\tilde{M}^{(k)}$ der Gleichung (37) unter Verwendung des Vergessensfaktors $\mu$ für zeitlich weiter zurückliegende Zweigmetriken, die iterative Berechnungsformel für die Pfadmetrik $\tilde{M}^{(k)}$ gemäß Gleichung (40) mit abschließender Betragsbildung der berechneten Pfadmetrik $\tilde{M}^{(k)}$, die iterative Berechnungsformel für die Pfadmetrik $\tilde{M}^{(k)}$ gemäß Gleichung (41) mit abschließender Realteilbildung der berechneten Pfadmetrik $\tilde{M}^{(k)}$, die iterative Berechnungsformel für die Pfadmetrik $\tilde{M}^{(k)}$ gemäß Gleichung (42) mit einer Betragsbildung der im jeweiligen Iterationsschritt für jedes Datensymbol $d(k)$ des Datensymbolalphabets ermittelten Zweigmetrik und die iterative Berechnungsformel für die Pfadmetrik $\tilde{M}^{(k)}$ gemäß Gleichung (43) mit einer Realteilbildung der im jeweiligen Iterationsschritt für jedes Datensymbol $d(k)$ des Datensymbolalphabets ermittelten Zweigmetrik verwendet werden.

Alternativ kann die Pfadmetrik $d(k)$ jeweils nach einer der iterativen Berechnungsformeln gemäß der Gleichungen (45) bis (48) berechnet werden, in denen die jeweiligen Zweigmetriken aus a-priori-Schätzfehlern $e^{(k|k-n)}$ und $e^{(k|k-m)}$ zu früheren Zeitpunkten $k - n$ und $k - m$ berechnet werden.

Im nächsten Verfahrensschritt S50 wird gemäß Gleichung (53) und (54) der Erweiterungsterm $\delta(k)$ und darauf aufbauend die erweiterte Metrik $\overline{\overline{M}}^{(k)}$ berechnet. Unter Verwendung eines Gewichtungsfaktors w gemäß Gleichung (55) kann eine unterschiedliche Gewichtung zwischen der iterativ ermittelten Metrik $\tilde{M}^{(k)}$ und dem Erweiterungsterm $\delta(k)$ bei der Berechnung der erweiterten Metrik $\overline{\overline{M}}^{(k)}$ verwirklicht werden.

Im darauf folgenden Verfahrensschritt S60 werden aus der für jedes Datensymbol $d(k)$ des im verwendeten Modulationsverfahren benutzten Datensymbolalphabets im Zeitpunkt $k$ jeweils berechneten erweiterten Metrik $\overline{\overline{M}}^{(k)}$ mittels eines Deepth-first- oder eines Breadth-first-Verfahrens die jeweils minimalen erweiterten Metriken $\overline{\overline{M}}^{(k)}$ ermittelt und damit das Datensymbol $\hat{d}(k)$ zum Zeitpunkt $k$ in den einzelnen "Überlebenspfaden" geschätzt.

Bei Verwendung eines Breadth-first-Verfahrens kann hierbei ausgehend vom im vorherigen Zeitpunkt $k$-1 für den jeweiligen "Überlebenspfad" ausgewählten Zustand $S_i$ in Anlehnung an den Viterbi-Algorithmus derjenige im Zeitpunkt $k$ nachfolgende Zustand $S_i$ und damit das diesen Zustand $S_i$ charakterisierende geschätzte Datensymbol $\hat{d}(k)$ zum Zeitpunkt $k$ ausgewählt werden, dass die kleinste Zweigmetrik aufweist. Auf diese Weise wird von jedem einzelnen im Zeitpunkt $k$-1 ausgewählten Zustand $S_i$ wieder jeweils ein einziger Zustand $S_i$ im Zeitpunkt $k$ ausgewählt und in den jeweiligen "Überlebenspfad" zum Zeitpunkt $k$ fortgesetzt. Alternativ können aber auch - wie in Fig. 3 dargestellt ist - Zustände $S_i$ ausgewählt werden, die jeweils die kleinsten Pfadmetriken aufweisen. Auf diese Weise können von einem im Zeitpunkt $k$-1 ausgewählten Zustand $S_i$ entweder mehrere Zustände $S_i$, ein einziger Zustand $S_i$ oder kein Zustand $S_i$ im Zeitpunkt $k$ ausgewählt werden. Bei beiden Varianten kann sich die Anzahl der ausgewählten Zustände $S_i$ im Zeitpunkt $k$ gegenüber den im Zeitpunkt $k$-1 ausgewählten Zuständen $S_i$ reduzieren, wenn sich mehrere im Zeitpunkt $k$-1 in jeweils einem unterschiedlichen Zustand $S_i$ befindliche "Überlebenspfade" in einem einzigen Zustand $S_i$ zum Zeitpunkt $k$ vereinigen.

Im Falle eines Deepth-first-Verfahrens wird das Trellis-Diagramm zuerst "in der Tiefe" analysiert, indem ein "Überlebenspfad" über so viele Zeitpunkte $k$ iterativ verfolgt wird, bis die jeweilige Pfadmetrik $\tilde{M}^{(k)}$ oder $\overline{\overline{M}}^{(k)}$ einen vorgegebenen Schwellenwert überschreitet. Bei Überschreitung der Schwellenwerts durch die jeweilige Pfadmetrik $\tilde{M}^{(k)}$ oder $\overline{\overline{M}}^{(k)}$ wird auf dem "Überlebenspfad" so viele Zeitpunkte $k$ zurückgeschritten, bis ein Verzweigungspfad gefunden ist, dessen Zweigmetrik zu einer Pfadmetrik $\tilde{M}^{(k)}$ oder $\overline{\overline{M}}^{(k)}$ führt, die unterhalb des vorgegebenen Schwellenwert liegt. Dieser Verzweigungspfad wird wiederum solange weiterverfolgt, bis die jeweilige Pfadmetrik $\tilde{M}^{(k)}$ oder $\overline{\overline{M}}^{(k)}$ wieder den vorgegebenen Schwellenwert überschreitet und durch Zurückschreiten im ausgewählten "Überlebenspfad" wiederum ein weiterer Verzweigungspfad gefunden ist, der zu einer gegenüber dem vorgegebenen Schwellenwert kleineren Pfadmetrik $\tilde{M}^{(k)}$ oder $\overline{\overline{M}}^{(k)}$ führt. Diese Vorgehensweise wird solange verfolgt, bis das Trellis-Diagramm bis zu einem vorgegebenen Zeitpunkt $k$ mit einem gefundenen "Überlebenspfad" durchlaufen ist.

Im nächsten Verfahrensschritt S70 wird die Kalman-Verstärkung $g^{(k)}$ gemäß Gleichung (34) bzw. gemäß Gleichung (39) bei Verwendung des Vergessensfaktors $\mu$ zur geringeren Gewichtung früher gesendeter Datensymbole $d(k)$ gegenüber aktueller gesendeten Datensymbolen $d(k)$ berechnet. Hierzu wird die für den jeweiligen "Überlebenspfad" ermittelte Schätzung $\underline{\hat{d}}(k)$ der bis zum Zeitpunkt $k$ gesendeten Datensymbol-Sequenz $\underline{d}(k)$ mit dem im vorherigen Verfahrensschritt S60 für den jeweiligen "Überlebenspfad" geschätzten Datensymbol $\hat{d}(k)$ zum Zeitpunkt $k$ und die Prädiktionsfehler-Korrelationsmatrix $K^{(k-1)}$ zum vorherigen Zeitpunkt $k$-1 verwendet. Diese Prädiktionsfehler-Korrelationsmatrix $K^{(k-1)}$ weist beim erstmaligen Durchlauf der Iteration die in Verfahrensschritt S20 initialisierten Werte und bei schon mehrmaligen Durchlauf der Iteration die in der letzten Iteration in Verfahrensschritt S70 iterativ ermittelten Werte der Korrelationsmatrix $K^{(k-1)}$ zum Zeitpunkt $k - 1$ auf.

Mit der auf diese Weise ermittelten Kalman-Verstärkung $g^{(k)}$ zum Zeitpunkt $k$ und der Prädiktionsfehler-Korrelationsmatrix $K^{(k-1)}$ zum Zeitpunkt $k$-1 wird ebenfalls in Verfahrensschritt S70 die Prädiktionsfehler-Korrelationsmatrix $K^{(k)}$ zum Zeitpunkt $k$ iterativ berechnet.

Schließlich wird in Verfahrensschritt S70 mit der soeben ermittelten Kalman-Verstärkung $g^{(k)}$ und des in Verfahrensschritt S30 berechneten a-priori-Schätzfehlers $e^{(k|k-1)}$ auf der Basis des Schätzwerts $\underline{\hat{h}}^{(k-1)}$ der Kanalimpulsantwort $\underline{h}^{(k)}$ zum Zeitpunkt $k$-1 der Schätzwert $\underline{\hat{h}}^{(k)}$ der Kanalimpulsantwort $\underline{h}^{(k)}$ zum Zeitpunkt $k$ iterativ berechnet. Der Schätzwert $\underline{\hat{h}}^{(k-1)}$ der Kanalimpulsantwort $\underline{h}^{(k)}$ zum Zeitpunkt $k$-1 ergibt sich bei erstmaligen Durchlauf der Iteration aus dem in der Erstkanalschätzung in Verfahrensschritt S10 ermittelten Schätzwert $\underline{\hat{h}}^{(-1)}$ der Kanalimpulsantwort $\underline{h}^{(k)}$ zum Zeitpunkt -1 und bei bereits mehrmaligen Durchlauf der Iteration aus dem in der letzten Iteration in Verfahrensschritt S70 iterativ ermittelten Schätzwerte $\underline{\hat{h}}^{(k-1)}$ der Kanalimpulsantwort $\underline{h}^{(k)}$ zum Zeitpunkt $k$-1.

In Verfahrensschritt S80 wird ermittelt, ob die Schätzung der Datensymbol-Sequenz $\underline{d}(k)$ abgeschlossen ist.

Dies ist der Fall, wenn nach einer bestimmten Anzahl von Iterationen sich alle vorhandenen "Überlebenspfade" endgültig in einem Zustand $S_i$ des Trellis-Diagramms zu einem bestimmten Zeitpunkt $k$ zu einem einzigen "Überlebenspfad" vereinigt haben und das erfindungsgemäße Verfahren abgeschlossen ist.

Falls dieses Ereignis noch nicht eingetreten ist, so wird in Verfahrensschritten S90 der nächste Zeitpunkt $k$+1 abgewartet und die nächste Iteration mit Verfahrensschritt S30 begonnen.

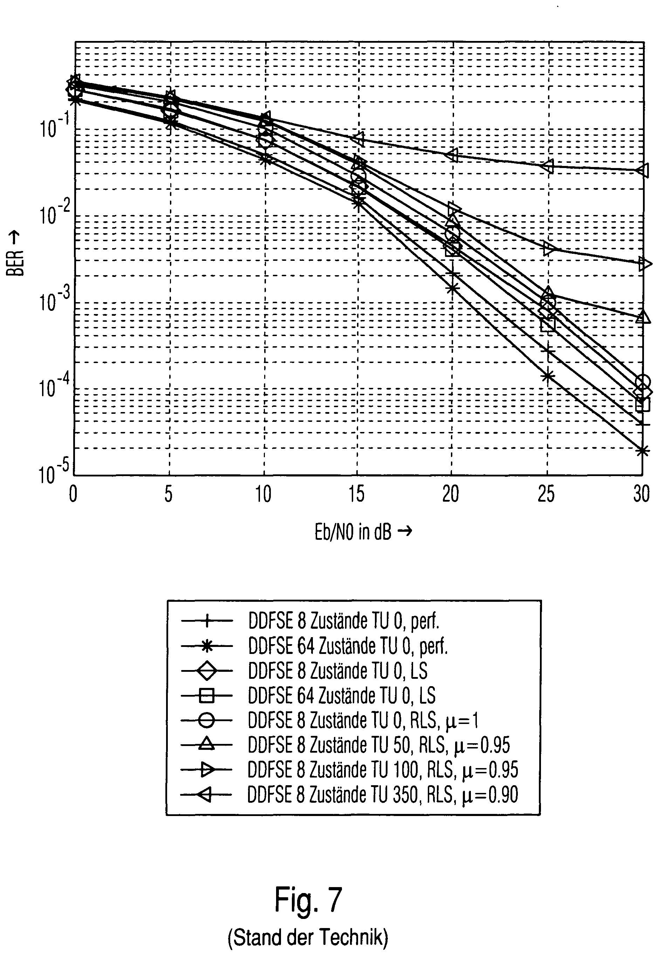

In Fig. 7 ist die Bitfehlerrate - $BER$ (Bit error rate) - als Funktion des Signal-Rauschabstands $\frac{E_b}{N_0}$ eines DDFSE-(Delayed-Decision-Feedback-Sequence-Estimation)-Verfahrens, das ein Verfahren zur gleichzeitigen Schätzung eines zeitveränderlichen Übertragungskanals und einer gesendeten Datensymbol-Sequenz $\underline{d}^{(k)}$ nach dem Stand der Technik darstellt, in einer städtischen Umgebung - TU (totally urban) - für eine unterschiedliche Anzahl von Zuständen $S_i$, bei einer unterschiedlichen Geschwindigkeit des Empfängers, bei Einsatz eines unterschiedlichen adaptiven Kanalschätzungsalgorithmuses - Least-Squares-Algorithmus (LS), Reduced-Least-Squares-Algorithmus (RLS) - und für unterschiedliche Vergessensfaktoren $\mu$ dargestellt.

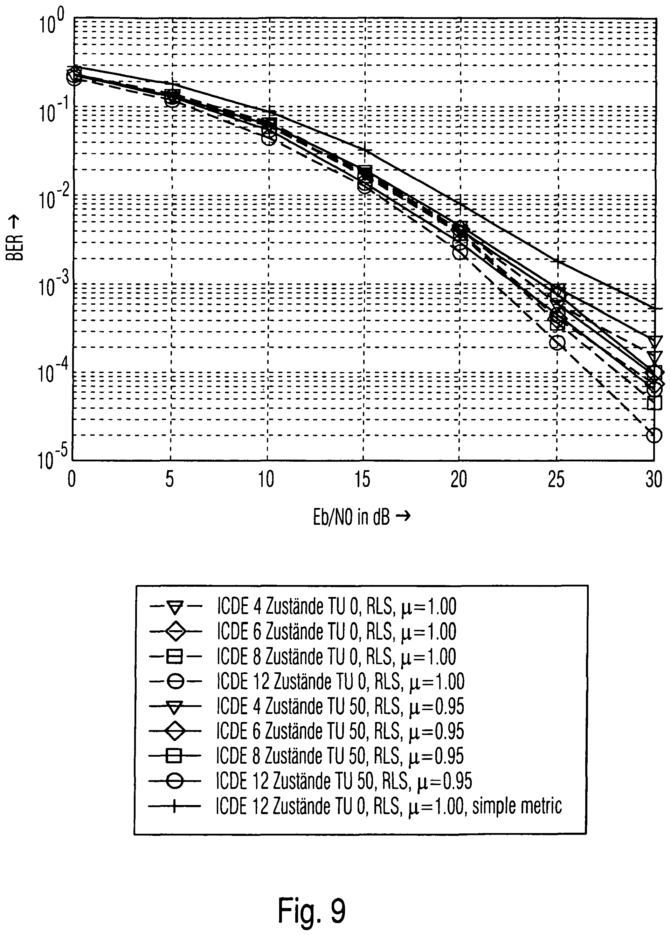

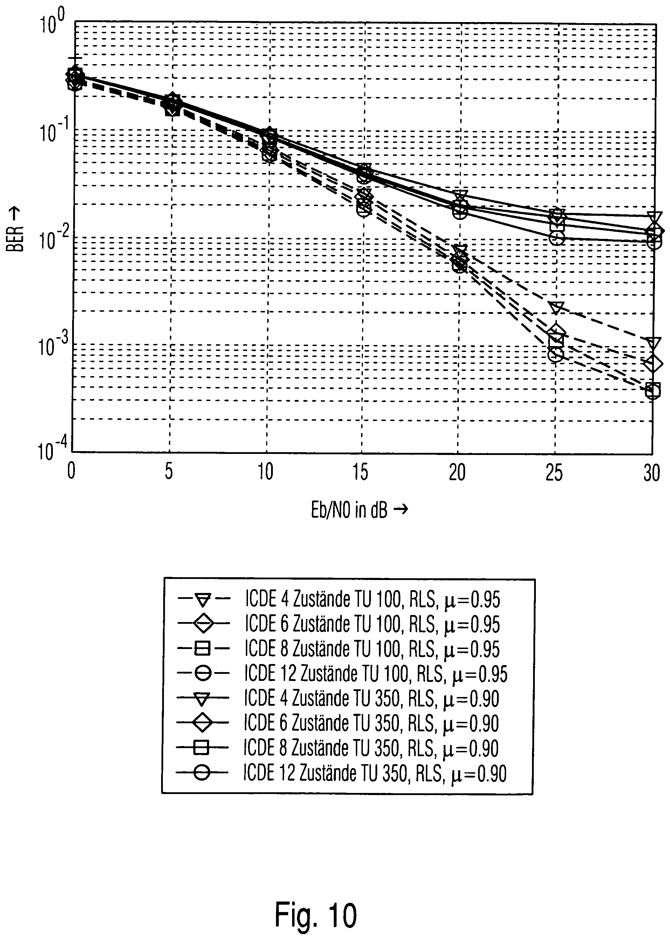

Zum Vergleich zeigt die Fig. 9 die Bitfehlerrate $BER$ als Funktion des Signal-Rauschabstands $\frac{E_b}{N_0}$ des erfindungsgemäßen Verfahrens zur Entzerrung einer über einen zeitveränderlichen Übertragungskanal empfangenen Datensymbol-Sequenz $\underline{r}^{(k)}$ bei Verwendung der iterativen Metriken $\tilde{M}^{(k)}$ und $\overline{\overline{M}}^{(k)}$ und die Fig. 10 die Bitfehlerrate $BER$ als Funktion des Signal-Rauschabstands $\frac{E_b}{N_0}$ des erfindungsgemäßen Verfahrens zur Entzerrung einer über einen zeitveränderlichen Übertragungskanals empfangenen Datensymbol-Sequenz $\underline{r}^{(k)}$ bei Verwendung einer erweiterten Metrik $\overline{\overline{M}}^{(k)}$ und bei Variation der zu Fig. 7 identischen Versuchsparameter für höhere Geschwindigkeiten (100$km/h$, 350$km/h$).

Bei einem ausgewählten Satz von Versuchsparameter - städtische Umgebung, 8 Zustände im Trellis-Diagramm, Kanalschätzung mit einem RLS-Algorithmus, Vergessensfaktor von 0,95 - ergibt sich bei Anwendung eines DDFSE-Verfahrens bei einer Geschwindigkeit von 100$km/h$ des Empfängers eine Bitfehlerrate $BER$ von 3·10$^{-3}$, während beim erfindungsgemäßen Verfahren unter Verwendung der erweiterten Metrik $\overline{\overline{M}}^{(k)}$ bei einer Geschwindigkeit von 100$km/h$ des Empfängers die Bitfehlerrate sogar bei 4·10$^{-4}$ liegt.

Die einfache iterative Metrik $\tilde{M}^{(k)}$ ist ebenfalls in Fig. 9 angegeben, der Gewinn durch Berücksichtigung des Terms $\delta(k)$ in der Metrik $\overline{\overline{M}}^{(k)}$ ist deutlich sichtbar.

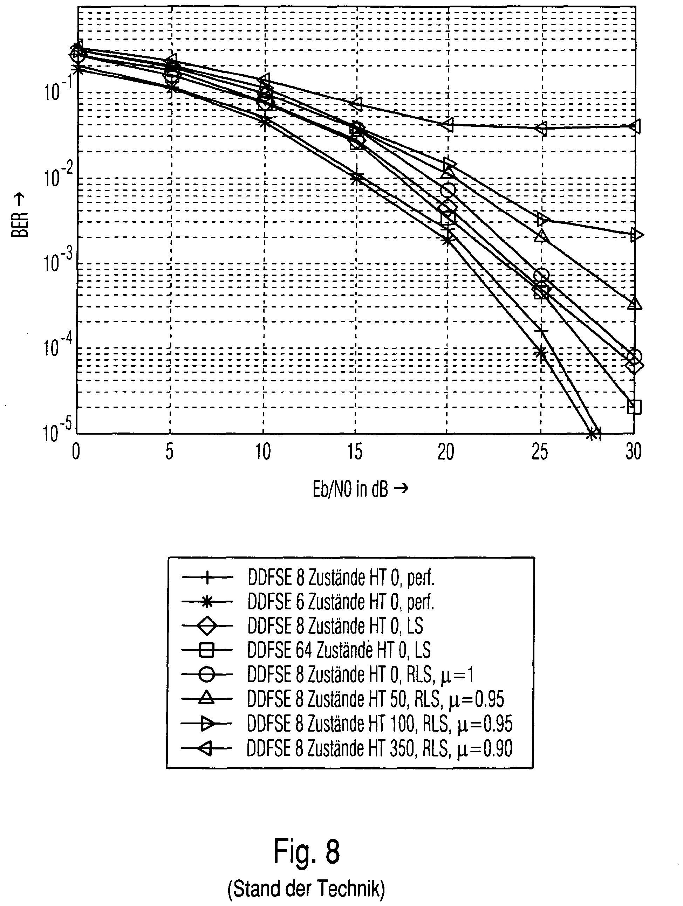

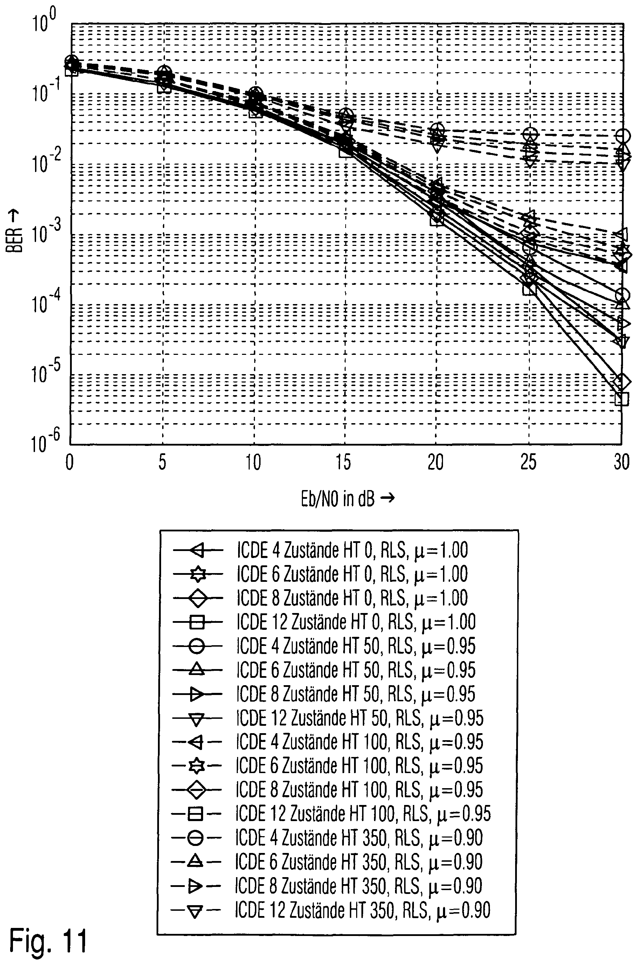

In hügeliger Umgebung - HT (hilly terrain) - ergibt sich bei dem ausgewählten Satz von Versuchsparametern - 8 Zustände im Trellis-Diagramm, Kanalschätzung mit einem RLS-Algorithmus, Geschwindigkeiten des Empfängers von 50$km/h$, Vergessensfaktors von 0,95 - bei einem DDFSE-Verfahren gemäß Fig. 8 eine Bitfehlerrate von 2,5·10$^{-3}$, während beim erfindungsgemäßen Verfahren unter Verwendung einer erweiterten Metrik $\overline{\overline{M}}^{(k)}$ gemäß Fig. 11 eine deutlich geringere Bitfehlerrate von 4,5·10$^{-5}$ erzielt wird.

Die Erfindung ist nicht auf die dargestellte Ausführungsformen beschränkt. Insbesondere sind alternativ zum RLS-Algorithmus als adaptives Kanalschätzverfahren andere rekursive Kanalschätzverfahren wie Kalman-Algorithmen oder affine Projektions-Algorithmen, wie bespielsweise der NLMS(Normalized-Least-Mean-Square)-Algorithmus, von der Erfindung abgedeckt.

## Patentansprüche

1. Verfahren zur Entzerrung einer über einen zeitveränderlichen Übertragungskanal empfangenen Datensymbol-Sequenz ($\underline{r}^{(k)}$), bei dem für jeden Zeitpunkt ($k$) im Wechsel die Impulsantwort ($\underline{h}^{(k)}$) des Übertragungskanals und das aktuell gesendete Datensymbol ($d(k)$) geschätzt wird, die Anzahl der für die Schätzung des aktuell gesendeten Datensymbols ($d(k)$) zu berücksichtigender Kombinationen von Datensymbol-Sequenzen ($\underline{d}^{(k)}$) gegenüber der maximal möglichen Anzahl von Kombinationen von Datensymbol-Sequenzen ($\underline{d}^{(k)}$) reduziert ist und für jeden im aktuellen Zeitpunkt ($k$) ausgewählten Zustand ($S_i$) im Zustandsdiagramm jeweils nur eine Kanalschätzungshypothese ($\underline{\hat{h}}^{(k)}$) benutzt wird, die sich aus einer Kanalschätzungshypothese ($\underline{\hat{h}}^{(k-1)}$, $\underline{\hat{h}}^{(k-2)}$, $\underline{\hat{h}}^{(k-3)}$,..) in einem der vorhergehenden Zeitpunkte ($k$-1, $k$-2, $k$-3,..) ergibt, wobei die Kanalschätzungshypothese ($\underline{\hat{h}}^{(k)}$) im aktuellen Zeitpunkt ($k$) über ein adaptives Kanalschätzungsverfahren aus der Kanalschätzungshypothese ($\underline{\hat{h}}^{(k-n)}$) in einem um $n$ Zeitpunkte zum aktuellen Zeitpunkt ($k$) früheren Zeitpunkt ($k-n$) ermittelt wird,
**dadurch gekennzeichnet,**

**dass** zur Schätzung der bis zum aktuellen Zeitpunkt ($k$) gesendeten Datensymbol-Sequenz ($\underline{d}^{(k)}$) ein Pfad sukzessive aus aufeinander folgenden Zuständen ($S_i$) ausgewählt wird,

solange die Pfadmetrik ($\tilde{M}^{(k)}$, $\overline{\overline{M}}^{(k)}$) des zuletzt ausgewählten Zustands ($S_i$) kleiner als ein Schwellwert ist, und andernfalls der Pfad iterativ in einem der zuvor ausgewählten Zustände ($S_i$) mit einem alternativen Zustand ($S_i$) bzw. dessen nachfolgenden Zuständen ($S_i$) fortgeführt wird, falls deren Pfadmetriken ($\tilde{M}^{(k)}$, $\overline{\overline{M}}^{(k)}$) kleiner als der Schwellwert sind,

**dass** die Pfadmetrik ($\tilde{M}^{(k)}$) eines Zustands ($S_i$) im aktuellen Zeitpunkt $k$ aus der Pfadmetrik ($\tilde{M}^{(k-1)}$) des jeweils vorausgehenden Zustands ($S_i$) zuzüglich einer Zweigmetrik zwischen dem jeweils vorausgehenden Zustand ($S_i$) im vorhergehenden Zeitpunkt $k$-1 und dem Zustand ($S_i$) im aktuellen Zeitpunkt $k$ iterativ berechnet wird, und dass die Zweigmetrik sich aus dem Produkt eines ersten a-priori-Schätzfehlers $e^{(k|k-n)}$und eines zweiten a-priori-Schätzfehlers $e^{(k|k-m)}$ ergibt, wobei die Zeitpunkte n und m in Abhängigkeit der Zeitveränderlichkeit des Übertragungskanals gewählt werden.

2. Verfahren zur Entzerrung nach Anspruch 1,
   **dadurch gekennzeichnet,**
   **dass** zur Schätzung des im aktuellen Zeitpunkt ($k$) gesendeten Datensymbols ($d(k)$) diejenigen Zustände ($S_i$) im aktuellen Zeitpunkt ($k$) ausgewählt werden, deren Pfadmetriken ($\tilde{M}^{(k)}$, $\overline{\overline{M}}^{(t)}$) minimal sind.

3. Verfahren zur Entzerrung nach Anspruch 2,
   **dadurch gekennzeichnet,**
   **dass** diejenigen Zustände ($S_i$) im aktuellen Zeitpunkt ($k$) ausgewählt werden, die von allen Zuständen ($S_i$) im aktuellen Zeitpunkt ($k$) eine minimale Pfadmetrik ($\tilde{M}^{(k)}$, $\overline{\overline{M}}^{(k)}$) aufweisen.

4. Verfahren zur Entzerrung nach Anspruch 2,
   **dadurch gekennzeichnet,**
   **dass** diejenigen Zustände ($S_i$) im aktuellen Zeitpunkt ($k$) ausgewählt werden, die von all denjenigen Zuständen ($S_i$), die jeweils einen gemeinsamen Vorgängerzustand ($S_i$) im vorherigen Zeitpunkt ($k$-1) aufweisen, im aktuellen Zeitpunkt ($k$) eine minimale Pfadmetrik ($\tilde{M}^{(k)}$, $\overline{\overline{M}}^{(k)}$) aufweisen.

5. Verfahren zur Entzerrung nach Anspruch 1,
   **dadurch gekennzeichnet,**
   **dass** die Zweigmetrik zwischen dem jeweils vorausgehenden Zustand ($S_i$) im vorhergehenden Zeitpunkt ($k$-1) und dem Zustand ($S_i$) im aktuellen Zeitpunkt ($k$) eine Funktion eines Produkts ($e^{(k|k-n)} \cdot e^{(k|k-m)}$) aus einem ersten a-priori-Schätzfehler ($e^{(k|k-n)}$) und zweiten a-priori-Schätzfehler ($e^{(k|k-m)}$) jeweils zwischen der bis zum aktuellen Zeitpunkt ($k$) empfangenen Datensymbol-Sequenz ($\underline{r}^{(k)}$) und der Schätzung ($\hat{\underline{d}}^{(k)T}\cdot\hat{\underline{h}}^{(k)}$) der bis zum aktuellen Zeitpunkt ($k$) empfangenen Datensymbol-Sequenz ($\underline{r}^{(k)}$) berücksichtigt wird.

6. Verfahren zur Entzerrung nach Anspruch 5,
   **dadurch gekennzeichnet,**
   **dass** die Funktion eine Betragsbildungsfunktion ist.

7. Verfahren zur Entzerrung nach Anspruch 5,
   **dadurch gekennzeichnet,**
   **dass** die Funktion eine Realteilbildungsfunktion ist.

8. Verfahren zur Entzerrung nach einem der Ansprüche 5 bis 7,
   **dadurch gekennzeichnet,**
   **dass** die Schätzung ($\hat{\underline{d}}^{(k)T} \cdot \hat{\underline{h}}^{(k-n)}$; $\hat{\underline{d}}^{(k)T} \cdot \hat{\underline{h}}^{(k-m)}$) der bis zum aktuellen Zeitpunkt ($k$) empfangenen Datensymbol-Sequenz ($\underline{r}^{(k)}$) des ersten a-priori-Schätzfehlers ($e^{(k|k-n)}$) und des zweiten a-priori-Schätzfehlers ($e^{(k|k-m)}$) aus der mit einer zu einem ersten bzw. zweiten Zeitpunkt ($k$-$n$; $k$-$m$) geschätzten Impulsantwort ($\hat{\underline{h}}^{(k-n)}$; $\hat{\underline{h}}^{(k-m)}$) des Übertragungskanals gewichteten Schätzung ($\hat{\underline{d}}^{(k)}$) der bis zum aktuellen Zeitpunkt ($k$) gesendeten Datensymbol-Sequenz ($\underline{d}^{(k)}$) ermittelt wird.

9. Verfahren zur Entzerrung nach Anspruch 8,
   **dadurch gekennzeichnet,**

dass der erste Zeitpunkt ($k$-$n$1) des ersten a-priori-Schätzfehlers ($e^{(k|k-n)}$) ein zum aktuellen Zeitpunkt ($k$) um $n$ Zeitpunkte vorausgehender Zeitpunkt ($k$-$n$) und der zweite Zeitpunkt ($k$-$m$) des zweiten a-priori-Schätzfehlers ($e^{(k|k-m)}$) ein zum aktuellen Zeitpunkt ($k$) um $m$ Zeitpunkte vorausgehender Zeitpunkt ($k$-$m$) ist.

10. Verfahren zur Entzerrung nach einem der Ansprüche 1, 5 bis 9, **dadurch gekennzeichnet,**
dass bei der iterativ berechneten Pfadmetrik ($\tilde{M}^{(k)}$) früher gesendete Datensymbole ($d(k)$) schwächer als später gesendete Datensymbole ($d(k)$) gewichtet werden.

11. Verfahren zur Entzerrung nach einem der Ansprüche 1, 5 bis 10, **dadurch gekennzeichnet,**
dass die iterativ berechnete Pfadmetrik ($\tilde{M}^{(k)}$) um einen Erweiterungsterm ($\delta(k)$) zu einer Erweiterungsmetrik ($\overline{\overline{M}}^{(k)}$) erweitert ist, wobei der Erweiterungsterm ($\delta(k)$) sich aus der Differenz zwischen den in zukünftigen Zeitpunkten ($k$+1, $k$+2, $k$+3,..) empfangenen Datensymbolen ($r(k$+1), $r(k$+2), $r(k$+3),..) und den mit der zum aktuellen Zeitpunkt ($k$) geschätzten Impulsantwort ($\hat{h}^{(k)}$) des Übertragungskanals gewichteten Schätzungen ($\hat{\underline{d}}^{(k)}$) der bis zum aktuellen Zeitpunkt ($k$) gesendeten Datensymbol-Sequenz ($\underline{d}^{(k)}$) ergibt.

12. Verfahren zur Entzerrung nach einem der Ansprüche 1 bis 11, **dadurch gekennzeichnet, dass** die Kanalschätzungshypothese ($\hat{\underline{h}}^{(k)}$) zum aktuellen Zeitpunkt ($k$) iterativ über ein adaptives rekursives Kanalschätzungsverfahren aus einer im vorhergehenden Zeitpunkt ($k$-1) geschätzten Kanalschätzungshypothese ($\hat{\underline{h}}^{(k-1)}$) ermittelt wird.

13. Verfahren zur Entzerrung nach Anspruch 12, **dadurch gekennzeichnet,**
dass das adaptive rekursive Kanälschätzungsverfahren der rekursive Least-Squares-Algorithmus ist.

14. Verfahren zur Entzerrung nach Anspruch 13, **dadurch gekennzeichnet,**
dass zur iterativen Berechnung der Kanalschätzungshypothese ($\hat{\underline{h}}^{(k)}$) für jeden im aktuellen Zeitpunkt ($k$) ausgewählten Zustand ($S_i$) ein a-priori-Schätzfehler ($e^{(k|k-1)}$) zwischen der bis zum aktuellen Zeitpunkt ($k$) empfangenen Datensymbol-Sequenz ($\underline{r}^{(k)}$) und der mit der zum vorhergehenden Zeitpunkt ($k$-1) für den jeweils vorausgehenden Zustand ($S_i$) geschätzten Impulsantwort ($\hat{\underline{h}}^{(k-1)}$) des Übertragungskanals gewichteten Schätzung ($\hat{\underline{d}}^{(k)}$) bis zum aktuellen Zeitpunkt ($k$) gesendeten Datensymbol-Sequenz ($\underline{d}^{(k)}$) ermittelt wird.

15. Verfahren zur Entzerrung nach einem der Ansprüche 1 bis 11, **dadurch gekennzeichnet,**
dass die Kanalschätzungshypothese ($\hat{\underline{h}}^{(k)}$) im aktuellen Zeitpunkt ($k$) über ein adaptives Kanalschätzungsverfahren aus der am Beginn (0) der Übertragung geschätzten Kanalschätzungshypothese ($\hat{\underline{h}}^{(0)}$) ermittelt wird.

16. Entzerrer zur Entzerrung einer über einen zeitveränderlichen Übertragungskanal empfangenen Datensymbol-Sequenz ($\underline{r}^{(k)}$), der für jeden Zeitpunkt ($k$) im Wechsel die Impulsantwort ($\underline{h}^{(k)}$) des Übertragungskanals und das aktuell gesendete Datensymbol ($d(k)$) schätzt, wobei die Anzahl der für die Schätzung des aktuell gesendeten Datensymbols ($d(k)$) zu berücksichtigender Kombinationen von Datensymbol-Sequenzen ($\underline{d}^{(k)}$) gegenüber der maximal möglichen Anzahl von Kombinationen von Datensymbol-Sequenzen ($\underline{d}^{(k)}$) reduziert ist und der Entzerrer für jeden im aktuellen Zeitpunkt ($k$) ausgewählten Zustand ($S_i$) im Zustandsdiagramm jeweils nur eine Kanalschätzungshypothese ($\hat{\underline{h}}^{(k)}$) benutzt, die sich aus einer Kanalschätzungshypothese ($\hat{\underline{h}}^{(k-1)}, \hat{\underline{h}}^{(k-2)}, \hat{\underline{h}}^{(k-3)},..$) in einem der vorhergehenden Zeitpunkte ($k$-1, $k$-2, $k$-3,..) ergibt,
wobei ein adaptiver Kanalschätzer die Kanalschätzungshypothese ($\hat{\underline{h}}^{(k)}$) im aktuellen Zeitpunkt ($k$) aus der Kanalschätzungshypothese ($\hat{\underline{h}}^{(k-n)}$) in einem um $n$ Zeitpunkte zum aktuellen Zeitpunkt ($k$) früheren Zeitpunkt ($k$-$n$) ermittelt,
**dadurch gekennzeichnet,**
dass zur Schätzung der bis zum aktuellen Zeitpunkt ($k$) gesendeten Datensymbol-Sequenz ($\underline{d}^{(k)}$) ein Pfad sukzessive aus aufeinander folgenden Zuständen ($S_i$) ausgewählt wird,
solange die Pfadmetrik ($\tilde{M}^{(k)}, \overline{\overline{M}}^{(k)}$) des zuletzt ausgewählten Zustands ($S_i$) kleiner als ein Schwellwert ist, und andernfalls der Pfad iterativ in einem der zuvor ausgewählten Zustände ($S_i$) mit einem alternativen Zustand ($S_i$) bzw. dessen nachfolgenden Zuständen ($S_i$) fortgeführt wird, falls deren Pfadmetriken ($\tilde{M}^{(k)}, \overline{\overline{M}}^{(k)}$) kleiner als der Schwellwert sind,
dass die Pfadmetrik ($\tilde{M}^{(k)}$) eines Zustands ($S_i$) im aktuellen Zeitpunkt $k$ aus der Pfadmetrik ($\tilde{M}^{(k-1)}$) des jeweils vorausgehenden Zustands ($S_i$) zuzüglich einer Zweigmetrik zwischen dem jeweils vorausgehenden Zustand ($S_i$) im vorhergehenden Zeitpunkt $k$-1 und dem Zustand ($S_i$) im aktuellen Zeitpunkt $k$ iterativ berechnet wird, und dass die Zweigmetrik sich aus dem Produkt eines ersten a-priori-Schätzfehlers $e^{(k|k-n)}$ und eines zweiten a-priori-Schätzfehlers $e^{(k|k-m)}$ ergibt, wobei die Zeitpunkte n und m in Abhängigkeit der Zeitveränderlichkeit des Übertragungskanals gewählt sind.

**17.** Digitales Speichermedium mit elektronisch auslesbaren Steuersignalen, die so mit einem programmierbaren Computer oder digitalen Signalprozessor zusammenwirken können dass das Verfahren nach einem der Ansprüche 1 bis 15 ausgeführt wird.

**18.** Computerprogramm-Produkt mit auf einem maschinenlesbaren Träger gespeicherten Programmcode-Mitteln, um alle Schritte gemäß einem der Ansprüche 1 bis 15 durchführen zu können, wenn das Programm auf einem Computer oder einem digitalen Signalprozessor ausgeführt wird.

**19.** Computerprogramm mit Programmcode-Mitteln, um alle Schritte gemäß einem der Ansprüche 1 bis 15 durchführen zu können, wenn das Programm auf einem Computer oder einem digitalen Signalprozessor ausgeführt wird.

**Claims**

**1.** Method for equalization of a data symbol sequence ($\underline{r}^{(k)}$) received via a time-variable transmission channel, wherein for each point in time ($k$) the pulse response ($\underline{h}^{(k)}$) of the transmission channel and the currently transmitted data symbol ($d(k)$) are estimated in alternation, the number of combinations of data symbol sequences ($\underline{d}^{(k)}$) to be considered for the estimation of the currently transmitted data symbol ($d(k)$) is reduced in relation to the maximum possible number of combinations of data symbol sequences ($\underline{d}^{(k)}$) and for each state ($S_i$) selected from the state diagram in the current point in time ($k$) in each case use is only made of one channel estimation hypothesis ($\hat{\underline{h}}^{(k)}$) which is obtained from a channel estimation hypothesis ($\hat{\underline{h}}^{(k-1)}$, ($\hat{\underline{h}}^{(k-2)}$), ($\hat{\underline{h}}^{(k-3)}$,..) in one of the preceding points in time ($k$-1, $k$-2, $k$-3,..),
wherein the channel estimation hypothesis ($\hat{\underline{h}}^{(k)}$) in the current point in time ($k$) is determined using an adaptive channel estimation method from the channel estimation hypothesis ($\hat{\underline{h}}^{(k-n)}$) in a point in time ($k$-$n$) which is $n$ points in time earlier than the current point in time ($k$),
**characterised in that**
for estimation of the data symbol sequence ($\underline{d}^{(k)}$) transmitted up to the current point in time ($k$), a path of successive states ($S_i$) is selected as long as the path metric $(\tilde{\underline{\Lambda}}, \overline{\overline{M}}^{(k)})$ of the last selected state ($S_i$) is less than a threshold value, and otherwise the path is continued iteratively in one of the previously selected states ($S_i$) with an alternative state ($S_i$) or its following states ($S_i$) if the path metrics $(\tilde{\underline{\Lambda}}, \overline{\overline{M}}^{(k)})$ thereof are less than the threshold value,
**in that** the path metric $(\tilde{\underline{\Lambda}})$ of a state ($S_i$) in the current point in time $k$ is calculated iteratively from the path metric $(\tilde{\underline{\Lambda}})$ of the preceding state ($S_i$) in each case plus a branch metric between the preceding state ($S_i$) in each case in the preceding point in time $k$-1 and the state ($S_i$) in the current point in time $k$, and
**in that** the branch metric is obtained from the product of a first a *priori* estimating error $e^{(k|k-n)}$ and a second a *priori* estimating error $e^{(k|k-m)}$, the points in time n and m being selected dependent on the time-variability of the transmission channel.

**2.** Method for equalization according to claim 1,
**characterised in that**
for estimation of the data symbol ($d(k)$) transmitted in the current point in time ($k$), the states ($S_i$) in the current point in time ($k$) are selected the path metrics $(\tilde{\underline{\Lambda}}, \overline{\overline{M}}^{(k)})$ of which are minimal.

**3.** Method for equalization according to claim 2,
**characterised in that**
the states ($S_i$) in the current point in time ($k$) are selected which of all the states ($S_i$) in the current point in time ($k$)

have a minimal path metric $(\tilde{\underline{\Lambda}}\,,\,\overline{\overline{\underline{M}}}^{(k)})$.

**4.** Method for equalization according to claim 2,
**characterised in that**
the states ($S_i$) in the current point in time ($k$) are selected which of all the states ($S_i$) which in each case have a common predecessor state ($S_j$) in the previous point in time ($k$-1), in the current point in time ($k$) have a minimal

path metric $(\tilde{\underline{\Lambda}}\,,\,\overline{\overline{\underline{M}}}^{(k)})$.

**5.** Method for equalization according to claim 1,
**characterised in that**
the branch metric between the preceding state ($S_j$) in each case in the preceding point in time ($k$-1) and the state ($S_i$) in the current point in time ($k$) takes into consideration a function of a product ($e^{(k|k-n)}\cdot e^{(k|k-m)}$) of a first a *priori* estimating error ($e^{(k|k-n)}$) and a second a *priori* estimating error ($e^{(k|k-m)}$) in each case between the data symbol sequence ($\underline{r}^{(k)}$) received up to the current point in time ($k$) and the estimation ($\underline{\hat{d}}^{(k)T} \cdot \underline{h}^{(k)}$) of the data symbol sequence ($\underline{r}^{(k)}$) received up to the current point in time ($k$).

**6.** Method for equalization according to claim 5,
**characterised in that**
the function is a magnitude forming function.

**7.** Method for equalization according to claim 5,
**characterised in that**
the function is a real part forming function.

**8.** Method for equalization according to one of claims 5 to 7,
**characterised in that**
the estimation ($\underline{\hat{d}}^{(k)T} \cdot \underline{h}^{(k-n)}$ ; $\underline{\hat{d}}^{(k)T} \cdot \underline{h}^{(k-m)}$) of the data symbol sequence ($\underline{r}^{(k)}$) received up to the current point in time ($k$) of the first a *priori* estimating error ($e^{(k|k-n)}$) and the second a *priori* estimating error ($e^{(k|k-m)}$) is determined from the estimation ($\underline{\hat{d}}^{(k)}$) of the data symbol sequence ($\underline{d}^{(k)}$) transmitted up to the current point in time ($k$) weighted with an estimated pulse response ($\underline{\hat{h}}^{(k-n)}$ ; $\underline{\hat{h}}^{(k-m)}$) of the transmission channel at a first or second point in time ($k$-$n$ ; $k$-$m$).

**9.** Method for equalization according to claim 8,
**characterised in that**
the first point in time ($k$-$n$) of the first a *priori* estimating error ($e^{(k|k-n)}$) is a point in time ($k$-$n$) which precedes the current point in time ($k$) by $n$ points in time and the second point in time *($k$-$m$)* of the second *a priori* estimating error ($e^{(k|k-m)}$) is a point in time *($k$-$m$)* which precedes the current point in time ($k$) by $m$ points in time.

**10.** Method for equalization according to one of claims 1, and 5 to 9,
**characterised in that**
with the iteratively calculated path metric $(\tilde{\underline{\Lambda}}\,)$, data symbols ($d(k)$) which are transmitted earlier receive a lesser weighting than data symbols ($d(k)$) which are transmitted later.

**11.** Method for equalization according to one of claims 1, and 5 to 10,
**characterised in that**

the iteratively calculated path metric $(\tilde{\underline{\Lambda}}\,)$ is expanded by an expansion term ($\delta(k)$) to form an expansion metric $(\overline{\overline{\underline{M}}}^{(k)})$, wherein the expansion term ($\delta(k)$) is obtained from the difference between the data symbols ($r(k+1)$, $r(k+2)$, $r(k+3)$,..) received in future points in time ($k$+1, $k$+2, $k$+3,..) and the estimations ($\underline{\hat{d}}^{(k)}$) of the data symbol sequence ($\underline{d}^{(k)}$) transmitted up to the current point in time ($k$) weighted with the estimated pulse response ($\underline{\hat{h}}^{(k)}$) of the transmission channel at the current point in time ($k$).

**12.** Method for equalization according to one of claims 1 to 11,
**characterised in that**
the channel estimation hypothesis ($\hat{\underline{h}}^{(k)}$) for the current point in time ($k$) is determined iteratively using an adaptive recursive channel estimation method from a channel estimation hypothesis ($\hat{\underline{h}}^{(k-1)}$) estimated in the preceding point in time ($k$-1).

**13.** Method for equalization according to claim 12,
**characterised in that**
the adaptive recursive channel estimation method is the recursive least squares algorithm.

**14.** Method for equalization according to claim 13,
**characterised in that**
for the iterative calculation of the channel estimation hypothesis ($\hat{\underline{h}}^{(k)}$) for each state ($S_i$) selected in the current point in time ($k$), an a *priori* estimating error ($e^{(k|k-1)}$) is determined between the data symbol sequence ($\underline{r}^{(k)}$) received up to the current point in time ($k$) and the estimation ($\hat{\underline{d}}^{(k)}$) of the data symbol sequence ($\underline{d}^{(k)}$) transmitted up to the current point in time ($k$) weighted with the pulse response ($\hat{\underline{h}}^{(k-1)}$) of the transmission channel estimated at the preceding point in time ($k$-1) for the preceding state ($S_i$) in each case.

**15.** Method for equalization according to one of claims 1 to 11,
**characterised in that**,
the channel estimation hypothesis ($\hat{\underline{h}}^{(k)}$) in the current point in time ($k$) is determined using an adaptive channel estimation method from the channel estimation hypothesis ($\hat{\underline{h}}^{(0)}$) estimated at the beginning (0) of the transmission.

**16.** Equalizer for equalization of a data symbol sequence ($\underline{r}^{(k)}$) received via a time-variable transmission channel, which equalizer for each point in time ($k$) estimates the pulse response ($\underline{h}^{(k)}$) of the transmission channel and the data symbol ($d(k)$ currently transmitted in alternation, wherein the number of combinations of data symbol sequences ($\underline{d}^{(k)}$) to be considered for the estimation of the data symbol ($d(k)$ currently transmitted is reduced in relation to the maximum possible number of combinations of data symbol sequences ($\underline{d}^{(k)}$) and for each state ($S_i$) selected from the state diagram in the current point in time ($k$) in each case the equalizer only makes use of one channel estimation hypothesis ($\hat{\underline{h}}^{(k)}$) which is obtained from a channel estimation hypothesis ($\hat{\underline{h}}^{(k-1)}$), $\hat{\underline{h}}^{(k-2)}$), ($\hat{\underline{h}}^{(k-3)}$,..) in one of the preceding points in time ($k$-1, $k$-2, $k$-3,..),
wherein an adaptive channel estimator determines the channel estimation hypothesis ($\hat{\underline{h}}^{(k)}$) in the current point in time ($k$) from the channel estimation hypothesis ($\hat{\underline{h}}^{(k-n)}$) in a point in time ($k$-$n$) which is $n$ points in time earlier than the current point in time ($k$),
**characterised in that**
for estimation of the data symbol sequence ($\underline{d}^{(k)}$) transmitted up to the current point in time ($k$), a path of successive states ($S_i$) is selected as long as the path metric $\left( \tilde{\underline{\Lambda}} \quad , \quad \overline{\overline{\underline{M}}}^{(k)} \right)$ of the last selected state ($S_i$) is less than a threshold value, and otherwise the path is continued iteratively in one of the previously selected states ($S_i$) with an alternative state ($S_i$) or its following states ($S_i$) if the path metrics $\left( \tilde{\underline{\Lambda}} \quad , \quad \overline{\overline{\underline{M}}}^{(k)} \right)$ thereof are less than the threshold value,
**in that** the path metric $\left( \tilde{\underline{\Lambda}} \quad \right)$ of a state ($S_i$) in the current point in time $k$ is calculated iteratively from the path metric $\left( \tilde{\underline{\Lambda}} \quad \right)$ of the preceding state ($S_i$) in each case plus a branch metric between the preceding state ($S_i$) in each case in the preceding point in time $k$-1 and the state ($S_i$) in the current point in time $k$, and
**in that** the branch metric is obtained from the product of a first a *priori* estimating error $e^{(k|k-n)}$ and a second a *priori* estimating error $e^{(k|k-n)}$, the points in time n and m being selected dependent on the time-variability of the transmission channel.

**17.** Digital data storage medium with electronically readable control signals which are able to interact with a programmable computer or digital signal processor so that the method according to one of claims 1 to 15 is implemented.

18. Computer programme product with programme code means stored on a machine-readable data storage medium in order to be able to implement all the steps according to one of claims 1 to 15 when the programme is implemented on a computer or a digital signal processor.

19. Computer programme with programme code means in order to be able to implement all the steps according to one of claims 1 to 15 when the programme is implemented on a computer or a digital signal processor.

**Revendications**

1. Procédé d'égalisation d'une séquence de symboles de données ($\underline{r}^{(k)}$) reçue par un canal de transmission variable dans le temps, selon lequel, à chaque instant ($k$), la réponse d'impulsion ($\underline{h}^{(k)}$) du canal de transmission et le symbole de données ($d^{(k)}$) couramment envoyé sont estimés alternativement, le nombre de combinaisons de séquences de symboles de données ($\underline{d}^{(k)}$) à prendre en compte pour l'estimation du symbole de données ($d^{(k)}$) couramment envoyé est réduit par rapport au nombre maximal de combinaisons possibles de séquences de symboles de données ($\underline{d}^{(k)}$) et pour chaque état ($S_i$) sélectionné à l'instant courant ($k$) dans le diagramme d'état, respectivement une seule hypothèse d'estimation de canal ($\hat{\underline{h}}^{(k)}$) est utilisée, ladite hypothèse étant obtenue à partir d'une hypothèse d'estimation de canal ($\hat{\underline{h}}^{(k-1)}$, $\hat{\underline{h}}^{(k-2)}$, $\hat{\underline{h}}^{(k-3)}$,..) à l'un des instants passés ($k$-1, $k$-2, $k$-3 ,..), dans lequel l'hypothèse d'estimation de canal ($\hat{\underline{h}}^{(k)}$) à l'instant courant ($k$) est déterminée par l'intermédiaire d'un procédé d'estimation de canal adaptatif à partir de l'hypothèse d'estimation de canal ($\hat{\underline{h}}^{(k-n)}$) à un instant ($k$-$n$) antérieur de $n$ instants par rapport à l'instant courant ($k$),
**caractérisé en ce que,**
pour l'estimation de la séquence de symboles de données ($\underline{d}^{(k)}$) envoyée jusqu'à l'instant courant ($k$), une voie composée d'états ($S_i$) successifs est sélectionnée, tant que la métrique de voie ($\tilde{\Lambda}_-$ , $\overline{\overline{M}}^{(k)}$) de l'état ($S_i$) sélectionné en dernier est inférieure à une valeur seuil, et dans le cas contraire la voie est poursuivie de manière itérative dans un des états ($S_i$) précédemment sélectionnés avec un état ($S_i$) alternatif ou ses états ($S_i$) suivants, au cas où leurs métriques de voie ($\tilde{\Lambda}_-$ , $\overline{\overline{M}}^{(k)}$) seraient inférieures à la valeur seuil,
**en ce que** la métrique de voie ($\tilde{\Lambda}_-$) d'un état ($S_i$) à l'instant courant $k$ est calculée de manière itérative à partir de la métrique de voie ($\tilde{\Lambda}_-$) de l'état ($S_i$) respectivement précédent majorée d'une métrique de branche entre l'état ($S_i$) respectivement précédent à l'instant passé $k$-1 et l'état ($S_i$) à l'instant courant $k$, et
**en ce que** la métrique de branche est obtenue à partir du produit d'une première erreur d'estimation a priori $e^{(k|k-n)}$ et d'une deuxième erreur d'estimation a priori $e^{(k|k-n)}$, dans lequel les instants n et m sont sélectionnés en fonction de la variabilité dans le temps du canal de transmission.

2. Procédé d'égalisation selon la revendication 1,
**caractérisé en ce que**,
pour l'estimation du symbole de données ($d(k)$) envoyé à l'instant courant ($k$), les états ($S_i$) dont les métriques de voie ($\tilde{\Lambda}_-$ , $\overline{\overline{M}}^{(k)}$) sont minimales sont sélectionnés à l'instant courant ($k$).

3. Procédé d'égalisation selon la revendication 2,
**caractérisé en ce que**
les états ($S_i$) qui parmi tous les états ($S_i$) présentent à l'instant courant ($k$) une métrique de voie ($\tilde{\Lambda}_-$ , $\overline{\overline{M}}^{(k)}$) minimale sont sélectionnés à l'instant courant ($k$).

4. Procédé d'égalisation selon la revendication 2,
**caractérisé en ce que**
les états ($S_i$) qui présentent à l'instant courant ($k$), parmi tous les états ($S_i$), présentant respectivement un état

antérieur commun ($S_i$) à l'instant antérieur ($k$-1), une métrique de voie ($\tilde{\Lambda}_-$ , $\overline{\overline{M}}^{(k)}$) minimale, sont sélectionnés à l'instant courant ($k$).

5.  Procédé d'égalisation selon la revendication 1,
    **caractérisé en ce que**
    la métrique de branche est prise en compte entre l'état respectivement précédent ($S_i$) à l'instant passé ($k$-1) et l'état ($S_i$) à l'instant courant ($k$) en fonction d'un produit ($e^{(k|k-n)} \cdot e^{(k|k-m)}$) d'une première erreur d'estimation a priori ($e^{(k|k-n)}$) et d'une deuxième erreur d'estimation a priori ($e^{(k|k-m)}$) respectivement entre la séquence de symboles de données ($\underline{r}^{(k)}$) reçue jusqu'à l'instant courant ($k$) et l'estimation ($\underline{\hat{d}}^{(k)T} \cdot \underline{\hat{h}}^{(k)}$) de la séquence de symboles de données ($\underline{r}^{(k)}$) reçue jusqu'à l'instant courant ($k$).

6.  Procédé d'égalisation selon la revendication 5,
    **caractérisé en ce que**
    la fonction est une fonction de formation de montant.

7.  Procédé d'égalisation selon la revendication 5,
    **caractérisé en ce que**
    la fonction est une fonction de formation de composante réelle.

8.  Procédé d'égalisation selon l'une des revendications 5 à 7,
    **caractérisé en ce que**
    l'estimation ($\underline{\hat{d}}^{(k)T} \cdot \underline{\hat{h}}^{(k-n)}$; $\underline{\hat{d}}^{(k)T} \cdot \underline{\hat{h}}^{(k-m)}$) de la séquence de symboles de données ($\underline{r}^{(k)}$), reçue jusqu'à l'instant courant ($k$), de la première erreur d'estimation a priori ($e^{(k|k-n)}$) et de la deuxième erreur d'estimation a priori ($e^{(k|k-m)}$) est déterminée à partir de l'estimation ($\underline{\hat{d}}^{(k)}$) pondérée au moyen d'une réponse d'impulsion ($\underline{\hat{h}}^{(k-n)}$; $\underline{\hat{h}}^{(k-m)}$) du canal de transmission estimée à un premier ou à un deuxième instant ($k$-$n$ ; $k$-$m$), de la séquence de symboles de données ($\underline{d}^{(k)}$) envoyée jusqu'à l'instant courant ($k$).

9.  Procédé d'égalisation selon la revendication 8,
    **caractérisé en ce que**
    le premier instant ($k$-$n$) de la première erreur d'estimation a priori ($e^{(k|k-n)}$) est un instant ($k$-$n$) précédent de $n$ instants par rapport à l'instant courant ($k$) et le deuxième instant *($k$-$m$)* de la deuxième erreur d'estimation a priori ( $e^{(k|k-m)}$) est un instant *($k$-$m$)* précédent de $m$ instants par rapport à l'instant courant ($k$).

10. Procédé d'égalisation selon l'une des revendications 1, 5 à 9,
    **caractérisé en ce que,**
    pour la métrique de voie ($\tilde{\Lambda}_-$ ) calculée de manière itérative, des symboles de données ($d(k)$) envoyés antérieurement sont pondérés de manière plus faible que des symboles de données ($d^{(k)}$) envoyés ultérieurement.

11. Procédé d'égalisation selon l'une des revendications 1, 5 à 10,
    **caractérisé en ce que**
    la métrique de voie ($\tilde{\Lambda}_-$ ) calculée de manière itérative est étendue d'un terme d'extension ($\delta(k)$) de manière à obtenir une métrique étendue ($\overline{\overline{M}}^{(k)}$) , dans lequel le terme d'extension ($\delta(k)$) est obtenu à partir de la différence entre les symboles de données ($r(k+1)$, $r(k+2)$, $r(k+3)$,..) reçus aux instants futurs ($k$+1, $k$+2, $k$+3,..) et les estimations ($\underline{\hat{d}}^{(k)}$), pondérées au moyen de la réponse d'impulsion ($\underline{\hat{h}}^{(k)}$) du canal de transmission estimée à l'instant courant ($k$), de la séquence de symboles de données ($\underline{d}^{(k)}$) envoyée jusqu'à l'instant courant ($k$).

12. Procédé d'égalisation selon l'une des revendications 1 à 11,
    **caractérisé en ce que**
    l'hypothèse d'estimation de canal ($\underline{\hat{h}}^{(k)}$) est déterminée à l'instant courant ($k$) de manière itérative par l'intermédiaire d'un procédé d'estimation de canal récursif adaptatif à partir d'une hypothèse d'estimation de canal ($\underline{\hat{h}}^{(k-1)}$) estimée à l'instant passé ($k$-1).

13. Procédé d'égalisation selon la revendication 12,
**caractérisé en ce que**
le procédé d'estimation de canal récursif adaptif est l'algorithme des moindres carrés récursifs.

14. Procédé d'égalisation selon la revendication 13,
**caractérisé en ce que,**
pour le calcul itératif de l'hypothèse d'estimation de canal ($\hat{\underline{h}}^{(k)}$) pour chaque état ($S_i$) sélectionné à l'instant courant ($k$), une erreur d'estimation a priori ($e^{(k|k-1)}$) entre la séquence de symboles de données ($\underline{r}^{(k)}$) reçue jusqu'à l'instant courant ( $k$) et la séquence de symboles de données ($\underline{d}^{(k)}$) envoyée jusqu'à l'instant courant ($k$), pondérée au moyen de la réponse d'impulsion ($\hat{\underline{h}}^{(k-1)}$) du canal de transmission estimée à l'instant passé ($k$-1) pour l'état ($S_i$) respectivement précédent, est déterminée.

15. Procédé d'égalisation selon l'une des revendications 1 à 11,
**caractérisé en ce que**
l'hypothèse d'estimation de canal ($\hat{\underline{h}}^{(k)}$) est déterminée à l'instant courant ($k$) par l'intermédiaire d'un procédé d'estimation de canal adaptif à partir de l'hypothèse d'estimation de canal ($\hat{\underline{h}}^{(0)}$) estimée au début (0) de la transmission.

16. Egaliseur pour l'égalisation d'une séquence de symboles de données ($\underline{r}^{(k)}$) reçue par l'intermédiaire d'un canal de transmission variable dans le temps, lequel égaliseur, à chaque instant ($k$), estime alternativement la réponse d'impulsion ($\underline{h}^{(k)}$) du canal de transmission et le symbole de données ($d^{(k)}$) couramment envoyé,
dans lequel le nombre de combinaisons de séquences de symboles de données ($\underline{d}^{(k)}$) à prendre en compte pour l'estimation du symbole de données ($d^{(k)}$) couramment envoyé est réduit par rapport au nombre maximal de combinaisons possibles de séquences de symboles de données ($\underline{d}^{(k)}$), et l'égaliseur utilise pour chaque état ($S_i$) sélectionné à l'instant courant ($k$) dans le diagramme d'état respectivement une seule hypothèse d'estimation de canal ($\hat{\underline{h}}^{(k)}$), ladite hypothèse est obtenue à partir d'une hypothèse d'estimation de canal ($\hat{\underline{h}}^{(k-1)}$), ($\hat{\underline{h}}^{(k-2)}$), ($\hat{\underline{h}}^{(k-3)}$,..) à l'un des instants passés
($k$-1, $k$-2, $k$-3,..),
dans lequel un estimateur de canal adaptatif détermine l'hypothèse d'estimation de canal ($\hat{\underline{h}}^{(k)}$) à l'instant courant ($k$) à partir de l'hypothèse d'estimation de canal ($\hat{\underline{h}}^{(k-n)}$) à un instant ($k$-$n$) antérieur de $n$ instants par rapport à l'instant courant ($k$),
**caractérisé en ce que**,
pour l'estimation de la séquence de symboles de données ($\underline{d}^{(k)}$) envoyée jusqu'à l'instant courant ($k$), une voie composée d'états ($S_i$) successifs est sélectionnée, tant que la métrique de voie $(\tilde{\underline{M}}, \overline{\overline{M}}^{(k)})$ de l'état ($S_i$) sélectionné en dernier est inférieure à une valeur seuil, et dans le cas contraire la voie est poursuivie de manière itérative dans un des états ($S_i$) précédemment sélectionnés avec un état ($S_i$) alternatif ou ses états ($S_i$) suivants,
au cas où leurs métriques de voie $(\tilde{\underline{M}}, \overline{\overline{M}}^{(k)})$ seraient inférieures à la valeur seuil,
**en ce que** la métrique de voie $(\tilde{\underline{M}})$ d'un état ($S_i$) à l'instant courant $k$ est calculée de manière itérative à partir de la métrique de voie $(\tilde{\underline{M}})$ de l'état ($S_i$) respectivement précédent majorée d'une métrique de branche entre l'état ($S_i$) respectivement précédent à l'instant passé $k$-1 et l'état ($S_i$) à l'instant courant $k$, et
**en ce que** la métrique de branche est obtenue à partir du produit d'une première erreur d'estimation a priori $e^{(k|k-n)}$ et d'une deuxième erreur d'estimation a priori $e^{(k|k-n)}$, dans lequel les instants n et m sont sélectionnés en fonction de la variabilité dans le temps du canal de transmission.

17. Support d'enregistrement numérique comprenant des signaux de commande pouvant être lus par voie électronique, qui peuvent coopérer avec un ordinateur programmable ou un processeur de signal numérique, de sorte que le procédé selon l'une des revendications 1 à 15 est exécuté.

18. Produit-programme informatique comprenant des moyens de code de programme mis en mémoire sur un support lisible par machine, afin de pouvoir mettre en oeuvre toutes les étapes selon l'une des revendications 1 à 15, lorsque le programme est exécuté sur un ordinateur ou un processeur de signal numérique.

19. Programme informatique comprenant des moyens de code de programme, afin de pouvoir mettre en oeuvre toutes les étapes selon l'une des revendications 1 à 15, lorsque le programme est exécuté sur un ordinateur ou un processeur de signal numérique.

$$\sum_k d(k) \cdot \delta(t-kT)$$

n(t)

t = k·T

r(k)

$g_T(t)$  1

$g_{CH}(\tau,t)$  2

$g_R(t)$  3

4

$g_{AP}(k)$  5

Kanal-daten-schätzer  6

$\hat{d}(k)$

**Fig. 1**   (Stand der Technik)

$|r(k) \cdot g_{AP}(k)| \rightarrow$

0.6
0.4
0.2
0

0     5     10     15     20     25

$n \rightarrow$

**Fig. 2**   (Stand der Technik)

$d_0$     $d_{Lt-1}$     $d_{Lt}$     $d_{Lt+1}$     $d_{Lt+2}$     $d_{Lt+3}$

Trainings-Daten-Symbolfrequenz

**Fig. 3**

$$\begin{bmatrix} r(L_t) & r(k-2) & r(k-1) & r(k) & \bigg| & r(k+1) & r(k+2) \end{bmatrix}$$

$$\begin{bmatrix} d(L_t)\cdot\hat{h}(0) & d(k-2)\cdot\hat{h}(0) & d(k-1)\cdot\hat{h}(0) & d(k)\cdot\hat{h}(0) & \bigg| & ?\cdot\hat{h}(0) & ?\cdot\hat{h}(0) \\ + & + & + & + & & + & + \\ d(L_t-1)\cdot\hat{h}(1) & d(k-3)\cdot\hat{h}(1) & d(k-2)\cdot\hat{h}(1) & d(k-1)\cdot\hat{h}(1) & & d(k)\cdot\hat{h}(1) & ?\cdot\hat{h}(1) \\ + & + & + & + & & + & + \\ d(L_t-2)\cdot\hat{h}(2) & d(k-4)\cdot\hat{h}(2) & d(k-3)\cdot\hat{h}(2) & d(k-2)\cdot\hat{h}(2) & & d(k-1)\cdot\hat{h}(2) & d(k)\cdot\hat{h}(2) \end{bmatrix}$$

$$\Rightarrow \tilde{M}^{(k)} \qquad\qquad \Rightarrow \delta(k)$$

## Fig. 4

## Fig. 5

Start

S10 — Erst Kanalschätzung der Kanalimpulsantwort des Übertragungskanals

S20 — Initialisierung der Komponenten der geschätzten Datensymbol-Sequenz $\hat{\underline{d}}^{(k)}$ in negativen Zeitpunkten K mit Wert 0 und der Prädiktionsfehler -Korrelations-matrix $K^{(k)}$ zum Zeitpunkt K=0 mit konstanten Faktor $\gamma \cdot L_h$ oder mit Werten der Vorabschätzung der Kanalimpulsantwort

S30 — Berechnung des a-priori-Schätzfehlers $e^{(k/k-1)}$ und des a-posteriori-Schätzfehlers $e^{(k/k)}$ aus dem empfangenen Datensymbol r(k), der geschätzten Datensymbol-Sequenz $\hat{\underline{d}}^{(k-1)}$ der Schätzwerte $\hat{h}^{(k)}$, $\hat{h}^{(k-1)}$, $\hat{h}^{(k-2)}$ usw. d. Kanalimpulsantwort u. aller möglichen Datensymbole d(k)

S40 — Iterative Berechnung der Metrik $\widetilde{M}^{(k)}$ mittels a-priori und a-posteriori-Schätzfehler $e^{(k/k-1)}$, $e^{(k/k)}$

S50 — Berechnung der erweiterten Metrik $\widetilde{M}^{(k)}$ aus iterativ berechneter Metrik $\widetilde{M}^{(k)}$ u. Erweiterungsterm $\delta(k)$

S60 — Schätzung des Datensymbols $\hat{d}(k)$ aus minimaler erweiterter Metrik $\widetilde{M}^{(k)}$ mittels Deepth-first oder Breadth-first-Verfahren

S70 — Berechnung der Kalman-Verstärkung $g^{(k)}$ mittels geschätzter Daten-symbol-Sequenz $\underline{d}^{(k)}$ iterative Berechnung der Kanalschätzung $\hat{h}^{(k)}$ und der Prädiktionsfehler-Korrelationsmatrix $K^{(k)}$ auf Basis d. Kalman-Verstärkung $g^{(k)}$, d. a-priori-Schätzfehlers $e^{(k/k-1)}$ und d. geschätzten Datensymbol-Sequenz $\hat{\underline{d}}^{(k)}$

ja — Datensymbol-Sequenz-Schätzung zu Ende ? — nein

S80

S90 — Abwarten des nächsten Zeitpunkts K+1

Ende

## Fig. 6

Fig. 7

(Stand der Technik)

Fig. 8

(Stand der Technik)

Fig. 9

Fig. 10

Fig. 11

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **BADRI-HOEHER, S. et al.** Fast Computation of a Discrete-Time Whitened Matched Filter Based on Kalman Filtering. *IEEE Transactions on Wireless Communications,* November 2004, vol. 3 (6), 2417-2424
- **YOUNIS, W. et al.** Joint Prefiltering and MLSE Equalization of Space-Time-Coded Transmissions Over Frequency-Selective Channels. *IEEE Transactions on Vehicular Technology,* Januar 2002, vol. 51 (1), 144-154

- **ISABELLA DE BROECK.** Interleaved Frequency-Division Multiple Acess. *Darmstädter Dissertation,* 09. Januar 2004, 60-83
- **KAMMEYER, K.D.** Nachrichtenübertragung. Teubner-Verlag, 1996, 554-555
- **TRÄGER, J.** Kombinierte Kanalschätzung und Dekodierung für Mobilfunkkanäle. Shaker-Verlag, 1993
- **KAMMEYER, K.D.** Nachrichtenübertragung. Teubner-Verlag, 1996, 729-730